# EUROPEAN PATENT APPLICATION

(11) **EP 4 811 861 A1**
(43) Date of publication of application: **23.09.2026**
(21) Application number: 24910275.7
(22) Date of filing: 30.10.2024
(51) Int. Cl.: H04W 28/12

(54) **DATA TRANSMISSION METHOD, APPARATUS, AND SYSTEM**

(30) Priority: 26.12.2023 CN 202311825742
(71) Applicant: Huawei Technologies Co., Ltd., Shenzhen, Guangdong 518129 (CN)
(72) Inventor: GE, Cuili, Shenzhen, Guangdong 518129 (CN); LI, Yan, Shenzhen, Guangdong 518129 (CN)
(74) Representative: Huawei European IPR
(86) International application number: PCT/CN2024/128648
(87) International publication number: WO 2025/139337

(57) **Abstract**

A data transmission method, an apparatus, and a system are provided. In the method, there is at least one tunnel between an access network device and a terminal device, the tunnel includes at least one stream, and the at least one stream is used to transmit data. The access network device may send mapping information to the terminal device, and then data transmission may be performed between the access network device and the terminal device based on the mapping information, to implement mapping between data transmitted through the tunnel or a stream on the tunnel and a QoS flow, thereby implementing differentiated transmission.

## Description

### CROSS-REFERENCE TO RELATED APPLICATIONS

This application claims priority to Chinese Patent Application No. 202311825742.3, filed with the China National Intellectual Property Administration on December 26, 2023 and entitled "DATA TRANSMISSION METHOD, APPARATUS, AND SYSTEM", which is incorporated herein by reference in its entirety.

### TECHNICAL FIELD

This application relates to the field of communication technologies, and in particular, to a data transmission method, an apparatus, and a system.

### BACKGROUND

In a wireless communication system, for example, in a new radio (new radio, NR) system, user equipment (user equipment, UE) may establish a protocol data unit (protocol data unit, PDU) session (session) with a data network (data network, DN) network element through a user plane function (user plane function, UPF) network element, and the PDU session provides a data transmission service between the UE and the DN network element. To support simultaneous data transmission of UE between 3GPP access and non-3GPP access technologies, a quick UDP internet connections (quick UDP internet connections, QUIC) protocol equivalent to the TCP is used to establish a QUIC connection between the UE and the UPF network element. Each connection may include different paths (paths) that are separately carried on a 3GPP access path and a non-3GPP access path. The QUIC protocol further has a multi-stream multiplexing feature, and can allow simultaneous transmission of data of a plurality of streams.

In some current designs, to fully leverage multi-stream multiplexing and multipath features of the QUIC, it is considered to introduce the QUIC protocol between UE and a RAN. After the QUIC protocol is introduced, an existing QoS mapping mechanism cannot satisfy differentiated transmission of data carried over QUIC. Therefore, after the QUIC protocol is introduced, how to design a new QoS mapping mechanism is a problem to be resolved.

### SUMMARY

This application provides a data transmission method, an apparatus, and a system, to design a QoS mapping mechanism for a QUIC protocol applicable to UE and an access network device, so as to better transmit QUIC-like traffic.

According to a first aspect, this application provides a data transmission method. The method may be applied to an access network device, there is at least one tunnel between the access network device and a terminal device, the tunnel includes at least one stream, the at least one stream is used to transmit data, and the method may include: obtaining mapping information, where the mapping information indicates a mapping relationship between the tunnel, a data radio bearer DRB, and a quality of service QoS flow; sending the mapping information to the terminal device; and performing data transmission with the terminal device based on the mapping information. For example, the access network device receives an uplink data packet from the terminal device based on the mapping information, and/or the access network device sends a downlink data packet to the terminal device based on the mapping information.

According to the foregoing solution, at least one tunnel may be introduced between the terminal device and the access network device for data transmission. Different streams on the tunnel may be used to carry different content of upper-layer data, for example, frames or code chips with different definitions of a video, and different types of data, such as voice, videos, data, or different transmission requirements of the upper-layer data, in the upper-layer data. Therefore, "steering" or identification may be performed on the upper-layer data based on different requirements, and QoS management on data transmitted through the tunnel is implemented based on the mapping information, to perform differentiated transmission on a corresponding DRB and QoS flow to ensure service experience of applications.

In a possible implementation, the at least one tunnel uses a target transport layer network protocol, and performing data transmission with the terminal device based on the mapping information includes: transmitting, with the terminal device based on the mapping information, a data packet that uses the target transport layer network protocol. For example, the target transport layer network protocol may include a quick UDP internet connections QUIC protocol.

According to the foregoing solution, the target transport layer network protocol may be used to carry different content of upper-layer data, for example, frames or code chips with different definitions of a video, and different types of data, such as voice, videos, data, or different transmission requirements of the upper-layer data, in the upper-layer data. Therefore, "steering" or identification may be performed on the upper-layer data based on different requirements. The access network device can implement QoS management on a tunneling protocol data packet based on the mapping information, to perform differentiated transmission on a corresponding DRB and QoS flow to ensure service experience of applications.

In a possible implementation, performing data transmission with the terminal device based on the mapping information includes: for each tunnel in the at least one tunnel, transmitting a data packet of the tunnel on a target DRB based on the mapping information, where the data packet of the tunnel includes a data packet of at least one stream on the tunnel, and the data packet of the at least one stream carries data of at least one QoS flow.

According to the foregoing solution, the access network device may map the data packet of the tunnel to the corresponding DRB based on the mapping information, to perform differentiated transmission on the corresponding DRB and QoS flow to ensure service experience of applications. It should be understood that, in this embodiment of this application, the data packet of the at least one stream may be a data frame of the at least one stream. A data format of the stream is not limited in this embodiment of this application.

The mapping information in this embodiment of this application may have a plurality of flexible implementations. In different implementations, implementation details of data transmission between the access network device and the terminal device are different. The following provides examples for description.

Example 1: The at least one stream on the tunnel includes a first stream, the mapping information includes a mapping relationship between a first QoS flow and the first stream and a mapping relationship between the first stream and a first DRB, and the first stream is carried on the first DRB. If the tunnel uses the target transport layer network protocol, the target DRB of the tunnel may include the first DRB.

According to this solution, data of a QoS flow may be encapsulated into a proper first stream, so that when the first stream is transmitted on a DRB, the first stream can be transmitted on a proper DRB, to finally implement differentiated transmission of application data and service experience assurance. There is a 1:1 mapping relationship between the QoS flow and the first stream, so that a QFI does not need to be carried in a transmitted corresponding data packet, thereby simplifying complexity of a tunneling protocol and a stream data packet.

For downlink data transmission, performing data transmission with the terminal device based on the mapping information includes: receiving a downlink data packet of the first QoS flow from a core network device; and encapsulating payload data of the downlink data packet of the first QoS flow into a downlink data packet of the first stream based on the mapping information; and sending the downlink data packet of the first stream through the first DRB. In this solution, data of a downlink QoS flow sent to the terminal device may be mapped and encapsulated into data of the first stream, and the data of the first stream into which the data of the QoS flow is encapsulated is transmitted on a DRB, so that differentiated identification and transmission of downlink data are implemented, and transmission assurance is provided for application experience.

For uplink data transmission, performing data transmission with the terminal device based on the mapping information may include: receiving an uplink data packet of the first stream through the first DRB based on the mapping information; encapsulating payload data of the uplink data packet of the first stream into an uplink data packet of the first QoS flow; and sending the uplink data packet of the first QoS flow to a core network device. In this solution, data of an uplink QoS flow sent by the terminal device may be mapped and encapsulated into data of the first stream, and transmitted on a corresponding DRB, so that differentiated identification and transmission of uplink data are implemented, and transmission assurance is provided for application experience.

Example 2: The at least one stream on the tunnel includes a first stream, the mapping information includes a mapping relationship between a plurality of QoS flows and the first stream and a mapping relationship between the first stream and a first DRB, and the first stream is carried on the first DRB. If the tunnel uses the target transport layer network protocol, the target DRB of the tunnel may include the first DRB.

According to the foregoing solution, the plurality of QoS flows may be mapped to the first stream, so that when the first stream is transmitted on a DRB, the first stream can be transmitted on a proper DRB, to finally implement differentiated transmission of application data and service experience assurance. In this solution, an n:1 mapping relationship between QoS flows and the first stream can improve efficiency of transmission between the terminal device and the access network device based on the target transport layer protocol, and reduce a quantity of first streams and context resources maintained by the protocol.

The plurality of QoS flows include a first QoS flow and a second QoS flow. For downlink data transmission, performing data transmission with the terminal device based on the mapping information may include: receiving a downlink data packet of the first QoS flow, where the downlink data packet of the first QoS flow includes an identifier of the first QoS flow; and encapsulating payload data of the downlink data packet of the first QoS flow into a downlink data packet of the first stream based on the mapping information, and sending the downlink data packet of the first stream through the first DRB; or receiving a downlink data packet of the second QoS flow, where the downlink data packet of the second QoS flow includes an identifier of the second QoS flow; and encapsulating payload data of the downlink data packet of the second QoS flow into a downlink data packet of the first stream based on the mapping information, and sending the downlink data packet of the first stream through the first DRB. In this solution, data of a plurality of downlink QoS flows sent to the terminal device may be mapped and encapsulated into data of the first stream, and the data of the first stream into which the data of the plurality of QoS flows is encapsulated is transmitted on a DRB, so that differentiated identification and transmission of downlink data are implemented, transmission assurance is provided for application experience, and a quantity of first streams and context resources maintained by the protocol are reduced.

For uplink data transmission, performing data transmission with the terminal device based on the mapping information may include: receiving an uplink data packet of the first stream through the first DRB based on the mapping information; and if the uplink data packet of the first stream includes the identifier of the first QoS flow, the method further includes: encapsulating payload data of the uplink data packet of the first stream into an uplink data packet of the first QoS flow based on the mapping information, and sending the uplink data packet of the first QoS flow to a core network device; or if the uplink data packet of the first stream includes the identifier of the second QoS flow, the method further includes: encapsulating payload data of the uplink data packet of the first stream into an uplink data packet of the second QoS flow based on the mapping information, and sending the uplink data packet of the second QoS flow to a core network device. In this solution, data of a plurality of uplink QoS flows sent by the terminal device may be mapped and encapsulated into data of the first stream, and transmitted on a corresponding DRB, so that differentiated identification and transmission of uplink data are implemented, and transmission assurance is provided for application experience. Example 3: The mapping information includes a mapping relationship between the tunnel and a first QoS flow and a mapping relationship between the tunnel and a first DRB, and data of the tunnel is carried on the first DRB. If the tunnel uses the target transport layer network protocol, the target DRB of the tunnel may include the first DRB.

According to the foregoing solution, a separate QoS flow can be mapped to a tunnel, and a tunneling protocol data packet can be transmitted on a DRB, so that a QoS flow can be transmitted on a proper DRB, to finally implement differentiated transmission of application data and service experience assurance. In this solution, a 1:1 mapping relationship between a QoS flow and a tunnel can improve efficiency of transmission between the terminal device and the access network device based on the target transport layer protocol, reduce a quantity of first streams and context resources maintained by the protocol, and simplify complexity of the protocol between the terminal device and the access network device.

For downlink data transmission, performing data transmission with the terminal device based on the mapping information may include: receiving a downlink data packet of the first QoS flow from a core network device; encapsulating payload data of the downlink data packet of the first QoS flow into a downlink data packet of the tunnel based on the mapping information; and sending the downlink data packet of the tunnel through the first DRB. In this solution, data of a downlink QoS flow sent to the terminal device may be mapped and encapsulated into data of the tunnel, and transmitted on a corresponding DRB, so that differentiated identification and transmission of downlink data are implemented, and transmission assurance is provided for application experience.

For uplink data transmission, performing data transmission with the terminal device based on the mapping information may include: receiving an uplink data packet of the tunnel through the first DRB based on the mapping information; encapsulating payload data of the uplink data packet of the tunnel into an uplink data packet of the first QoS flow; and sending the uplink data packet of the first QoS flow to a core network device. In this solution, data of an uplink QoS flow sent by the terminal device may be mapped and encapsulated into a data packet of the tunnel, and transmitted on a corresponding DRB, so that differentiated identification and transmission of uplink data are implemented, and transmission assurance is provided for application experience.

Example 4: The mapping information includes a mapping relationship between the tunnel and a first DRB and a mapping relationship between a first stream on the tunnel and a first QoS flow, and data of the tunnel is carried on the first DRB. If the tunnel uses the target transport layer network protocol, the target DRB of the tunnel may include the first DRB.

According to the foregoing solution, refined data transmission management based on a tunnel and a tunnel stream is provided, and service data of a QoS flow and a stream carried in a tunneling protocol data packet is transmitted on a DRB, to finally implement differentiated transmission of application data and service experience assurance. In this solution, a 1:1 mapping relationship between a DRB and a tunnel can implement mapping between a QoS flow and a tunnel stream, and can improve efficiency of transmission between the terminal device and the access network device based on the target transport layer protocol.

For downlink data transmission, performing data transmission with the terminal device based on the mapping information may include: receiving a downlink data packet of the first QoS flow from a core network device; encapsulating payload data of the downlink data packet of the first QoS flow into a downlink data packet of the first stream on the tunnel based on the mapping information; and sending the downlink data packet of the first stream on the tunnel through the first DRB. In this solution, data of a downlink QoS flow sent by the terminal device may be mapped and encapsulated into a data packet of a stream on the tunnel, and transmitted on a corresponding DRB, so that differentiated identification and transmission of uplink data are implemented, and transmission assurance is provided for application experience.

For uplink data transmission, performing data transmission with the terminal device based on the mapping information may include: receiving an uplink data packet of the first stream on the tunnel through the first DRB based on the mapping information; encapsulating payload data of the uplink data packet of the first stream on the tunnel into an uplink data packet of the first QoS flow; and sending the uplink data packet of the first QoS flow to a core network device. In this solution, data of an uplink QoS flow sent by the terminal device may be mapped and encapsulated into a data packet of a stream on the tunnel, and transmitted on a corresponding DRB, so that differentiated identification and transmission of uplink data are implemented, and transmission assurance is provided for application experience.

According to a second aspect, this application provides a data transmission method. The method may be applied to a terminal device, there is at least one tunnel between the terminal device and an access network device, the tunnel includes at least one stream, the at least one stream is used to transmit data, and the method includes: receiving mapping information, where the mapping information indicates a mapping relationship between the tunnel, a data radio bearer DRB, and a quality of service QoS flow; and performing data transmission with the access network device based on the mapping information. For example, the terminal device sends an uplink data packet to the access network device based on the mapping information, and/or receives a downlink data packet from the access network device based on the mapping information.

In a possible implementation, the at least one tunnel uses a target transport layer network protocol, and performing data transmission with the access network device based on the mapping information includes: transmitting, with the access network device based on the mapping information, a data packet that uses the target transport layer network protocol. For example, the target transport layer network protocol may include a quick UDP internet connections QUIC protocol.

In a possible implementation, performing data transmission with the access network device based on the mapping information includes: for each tunnel in the at least one tunnel, transmitting a data packet of the tunnel on a target DRB based on the mapping information, where the data packet of the tunnel includes a data packet of at least one stream on the tunnel, and the data packet of the at least one stream carries data of at least one QoS flow.

The mapping information in this embodiment of this application may have a plurality of flexible implementations. In different implementations, implementation details of data transmission between the access network device and the terminal device are different. The following provides examples for description.

Example 1: The at least one stream on the tunnel includes a first stream, the mapping information includes a mapping relationship between a first QoS flow and the first stream and a mapping relationship between the first stream and a first DRB, and the first stream is carried on the first DRB. If the tunnel uses the target transport layer network protocol, the target DRB of the tunnel may include the first DRB.

For downlink data transmission, performing data transmission with the access network device based on the mapping information may include: receiving a downlink data packet of the first stream through the first DRB based on the mapping information; and decapsulating the downlink data packet, and delivering a payload of the downlink data packet to an upper-layer protocol.

For uplink data transmission, performing data transmission with the access network device based on the mapping information may include: sending the uplink data packet based on the mapping information includes: obtaining data delivered by an upper-layer protocol, and encapsulating the data into a payload of an uplink data packet of the first stream based on the mapping information; and sending the uplink data packet through the first DRB.

Example 2: The at least one stream on the tunnel includes a first stream, the mapping information includes a mapping relationship between a plurality of QoS flows and the first stream and a mapping relationship between the first stream and a first DRB, and the first stream is carried on the first DRB.

The plurality of QoS flows include a first QoS flow and a second QoS flow. For downlink data transmission, performing data transmission with the access network device based on the mapping information may include: receiving a downlink data packet of the first stream through the first DRB based on the mapping information, where the downlink data packet includes an identifier of the first QoS flow or an identifier of the second QoS flow; and decapsulating the downlink data packet, and delivering a payload of the downlink data packet to an upper-layer protocol.

For uplink data transmission, performing data transmission with the access network device based on the mapping information may include: obtaining data delivered by an upper-layer protocol, and encapsulating the data into a payload of an uplink data packet of the first stream based on the mapping information, where the uplink data packet includes an identifier of the first QoS flow or an identifier of the second QoS flow; and sending the uplink data packet of the first stream through the first DRB.

Example 3: The mapping information includes a mapping relationship between the tunnel and a first QoS flow and a mapping relationship between the tunnel and a first DRB, and data of the tunnel is carried on the first DRB.

For downlink data transmission, performing data transmission with the access network device based on the mapping information may include: receiving a downlink data packet of the tunnel through the first DRB based on the mapping information; and decapsulating the downlink data packet of the tunnel, and delivering a payload of the downlink data packet to an upper-layer protocol.

For uplink data transmission, performing data transmission with the access network device based on the mapping information includes: obtaining data delivered by an upper-layer protocol, and encapsulating the data into a payload of an uplink data packet of the tunnel based on the mapping information; and sending the uplink data packet through the first DRB.

Example 4: The mapping information includes a mapping relationship between the tunnel and a first DRB and a mapping relationship between a first stream on the tunnel and a first QoS flow, and data of the tunnel is carried on the first DRB.

For downlink data transmission, performing data transmission with the access network device based on the mapping information includes: receiving a downlink data packet of the first stream on the tunnel through the first DRB based on the mapping information; and decapsulating the downlink data packet of the first stream on the tunnel, and delivering a payload of the downlink data packet to an upper-layer protocol.

For uplink data transmission, performing data transmission with the access network device based on the mapping information includes: obtaining data delivered by an upper-layer protocol, and encapsulating the data into a payload of an uplink data packet of the first stream on the tunnel based on the mapping information; and sending the uplink data packet through the first DRB.

According to a third aspect, this application provides a data transmission method. The method may be applied to an access network device, there is at least one tunnel between the access network device and a terminal device, the tunnel includes at least one stream, and the at least one stream is used to transmit data; and the method may include: obtaining mapping information, where the mapping information indicates a mapping relationship between the tunnel, a data radio bearer DRB, and a quality of service QoS flow; sending the mapping information to the terminal device; and for each tunnel in the at least one tunnel, transmitting a data packet of the tunnel on a target DRB based on the mapping information, where the data packet of the tunnel includes a data packet of at least one stream on the tunnel, and the data packet of the at least one stream carries data of at least one QoS flow. For specific implementation details, refer to any one of the foregoing possible implementations of the first aspect. Details are not described herein again.

According to a fourth aspect, an embodiment of this application provides a data transmission method. The method may be applied to a terminal device, there is at least one tunnel between an access network device and the terminal device, the tunnel includes at least one stream, the at least one stream is used to transmit data, and the method may include: receiving mapping information, where the mapping information indicates a mapping relationship between the tunnel, a data radio bearer DRB, and a quality of service QoS flow; and for each tunnel in the at least one tunnel, transmitting a data packet of the tunnel on a target DRB based on the mapping information, where the data packet of the tunnel includes a data packet of at least one stream on the tunnel, and the data packet of the at least one stream carries data of at least one QoS flow. For specific implementation details, refer to any one of the foregoing possible implementations of the second aspect. Details are not described herein again.

According to a fifth aspect, this application provides a communication apparatus, including at least one processor and an interface circuit. The interface circuit is configured to provide data or code instructions for the at least one processor, and the at least one processor is configured to implement the method according to any one of the first aspect and the possible designs of the first aspect, or implement the method according to any one of the second aspect and the possible designs of the second aspect, or implement the method according to any one of the third aspect and the possible designs of the third aspect, or implement the method according to any one of the fourth aspect or the possible designs of the fourth aspect.

According to a sixth aspect, an embodiment of this application provides a communication system, including a communication apparatus configured to implement the method according to any one of the first aspect and the possible designs of the first aspect, or a communication apparatus configured to implement the method according to any one of the third aspect and the possible designs of the third aspect, and a communication apparatus configured to implement the method according to any one of the second aspect and the possible designs of the second aspect, or a communication apparatus configured to implement the method according to any one of the fourth aspect and the possible designs of the fourth aspect.

According to a seventh aspect, an embodiment of this application provides a computer-readable storage medium. The computer-readable storage medium stores program code, and when the program code is run on a computer, the computer is enabled to perform the method according to any one of the first aspect and the possible designs of the first aspect, or when the program code is run on a computer, the computer is enabled to perform the method according to any one of the second aspect and the possible designs of the second aspect, or when the program code is run on a computer, the computer is enabled to perform the method according to any one of the third aspect and the possible designs of the third aspect, or when the program code is run on a computer, the computer is enabled to perform the method according to any one of the fourth aspect and the possible designs of the fourth aspect.

According to an eighth aspect, an embodiment of this application provides a computer program product. When the computer program product runs on a computer, the computer is enabled to perform the method according to any one of the first aspect and the possible designs of the first aspect, or perform the method according to any one of the second aspect and the possible designs of the second aspect, or perform the method according to any one of the third aspect and the possible designs of the third aspect, or perform the method according to any one of the fourth aspect and the possible designs of the fourth aspect.

Based on the implementations provided in the foregoing aspects, embodiments of this application may be further combined to provide more implementations.

### BRIEF DESCRIPTION OF DRAWINGS

FIG. 1(a) and FIG. 1(b) are diagrams of architectures of communication systems to which an embodiment of this application is applicable;
FIG. 2 is a diagram of an architecture of a protocol stack;
FIG. 3 is a diagram of an encapsulation mode of a QUIC data packet;
FIG. 4 is a diagram of a frame of a QUIC data packet;
FIG. 5 is a diagram of an architecture of a protocol stack;
FIG. 6 is a diagram of a principle of QoS mapping;
FIG. 7 is a diagram of a QoS mapping relationship;
FIG. 8 is a schematic flowchart of a data transmission method according to an embodiment of this application;
FIG. 9 is a diagram of a session establishment process according to an embodiment of this application;
FIG. 10 is a diagram of a QoS mapping model;
FIG. 11 and FIG. 12 respectively show a downlink data transmission process and an uplink data transmission process corresponding to Manner 1 according to an embodiment of this application;
FIG. 13 is a diagram of another QoS mapping model;
FIG. 14 and FIG. 15 respectively show a downlink data transmission process and an uplink data transmission process corresponding to Manner 2 according to an embodiment of this application;
FIG. 16 and FIG. 17 respectively show a downlink data transmission process and an uplink data transmission process corresponding to Manner 3 according to an embodiment of this application;
FIG. 18 and FIG. 19 respectively show a downlink data transmission process and an uplink data transmission process corresponding to Manner 4 according to an embodiment of this application;
FIG. 20 is a diagram of a structure of a communication apparatus; and
FIG. 21 is a diagram of a structure of another communication apparatus.

### DESCRIPTION OF EMBODIMENTS

To cope with challenges for wireless broadband technologies and maintain a leading advantage of a 3rd generation partnership project (3rd generation partnership project, 3GPP) network, the 3GPP standard group has formulated a next generation mobile communication network system (Next Generation System) architecture, which is referred to as a 5G network architecture. The architecture not only supports access to a 5G core network (core network, CN) by using a radio access technology (for example, a long term evolution (long term evolution, LTE) access technology or a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

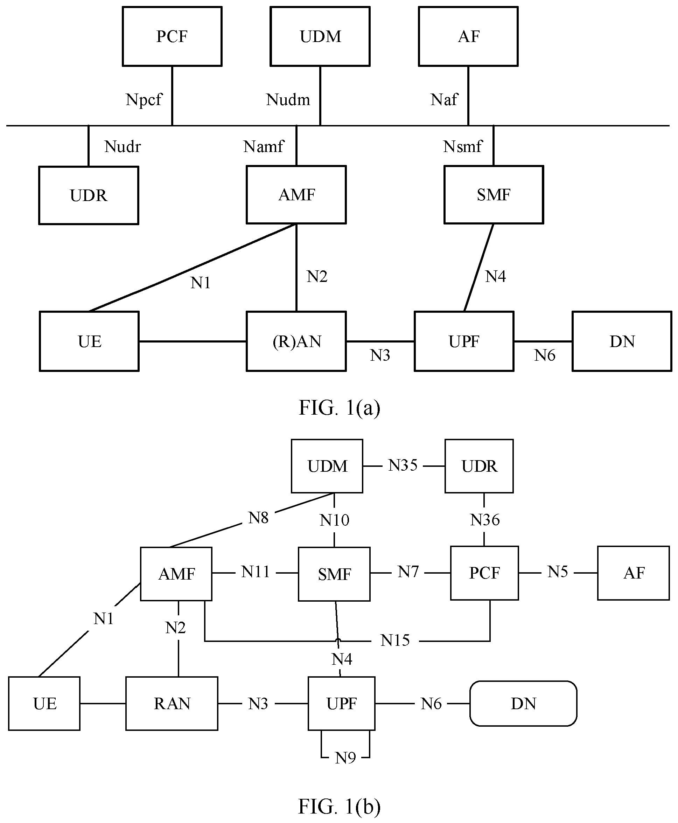

FIG. 1(a) is a diagram of a 5G network architecture based on a service-based architecture. The 5G network architecture shown in FIG. 1(a) may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network expos) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart home, smart office, smart wearables, smart transportation, and smart city. The terminal device may be a mobile phone, a tablet computer, a computer having a wireless transceiver function, a wearable device, a vehicle, an urban air transportation means (like an uncrewed aerial vehicle or a helicopter), a ship, a robot, a mechanical arm, a smart home device, or the like.

The access network device may be a radio access network (radio access network, RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, or a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed-line phone network device, a switch, or a router.

The access network device and the terminal device may be at fixed locations, or may be movable. The access network device and the terminal device may be deployed on land, including an indoor or outdoor device, a handheld device, or a vehicle-mounted device; or may be deployed on a water surface; or may be deployed on a plane, a balloon, and an artificial satellite in the air. Application scenarios of the access network device and the terminal device are not limited in embodiments of this application.

The AMF network element is responsible for mobility management of the UE, including mobility status management, allocation of a temporary identity of the UE, and authentication and authorization on the UE.

The SMF network element is responsible for UPF network element selection, UPF network element reselection, IP address allocation, bearer establishment, modification, and release, and quality of service (quality of service, QoS) control.

The UPF network element supports all or some of the following functions: interconnection between a protocol data unit (protocol data unit, PDU) session and a data network; packet routing and forwarding (for example, supporting uplink classification (Uplink classifier) on traffic and then forwarding of the traffic to a data network); and data packet detection.

The UDM network element is responsible for managing subscription data, and notifying a corresponding network element when the subscription data is modified.

The UDR network element stores and retrieves subscription data, policy data, common architecture data, and the like for the UDM network element, the PCF network element, and the NEF network element to obtain related data. The UDR network element needs to provide different data access authentication mechanisms for different types of data such as subscription data and policy data, to ensure data access security. For an illegal service-based operation or data access request, the UDR network element needs to return a failure response carrying a proper cause value.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element is responsible for policy control functions such as charging at a session level and a service flow level, QoS bandwidth assurance and mobility management, and terminal device policy decision. The PCF network element includes an access and mobility management policy control function (access and mobility management policy control function, AM PCF) network element and a session management policy control function (session management PCF, SM PCF) network element. The AM PCF network element is configured to make an AM policy for a terminal device, and the AM PCF network element may also be referred to as a policy control network element that provides a service for a terminal device (PCF for UE). The SM PCF network element is configured to make a session management policy (session management policy, SM policy) for a session, and the SM PCF network element may also be referred to as a policy control network element that provides a service for a session (PCF for a PDU session).

The NRF network element may be configured to provide a network element discovery function, and provide, based on a request of another network element, network element information corresponding to a network element type. The NRF further provides a network element management service, for example, network element registration, update, and deregistration, and network element status subscription and push.

The BSF network element may provide functions such as BSF service registration/deregistration/update, detection on a connection to the NRF, session binding information creation, UE information obtaining, and session binding information query for duplicate IP addresses.

The AUSF network element is responsible for performing authentication on the UE, to determine whether to allow the UE to access a network.

The DN is a network located outside an operator network. The operator network may access a plurality of DNs, and a plurality of services may be deployed on the DN, to provide services such as data and/or voice for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like on the internal office network of the company.

In FIG. 1(a), Npcf, Nufr, Nudm, Naf, Namf, Nsmf are respectively service-based interfaces provided by the PCF, the UDR, the UDM, the AF, the AMF, and the SMF, and are configured to invoke corresponding service-based operations. N1, N2, N3, N4, and N6 are interface sequence numbers. Meanings of these interface sequence numbers are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information and the like from a core network side to the access network device.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF and the DN, and is configured to transfer uplink and downlink user data flows between the UPF and the DN.

FIG. 1(b) is a diagram of a 5G network architecture based on point-to-point interfaces. For descriptions of functions of network elements in the figure, refer to descriptions of functions of corresponding network elements in FIG. 1(a). Details are not described again. A main difference between FIG. 1(b) and FIG. 1(a) lies in the following: Interfaces between control plane network elements in FIG. 1(a) are service-based interfaces, and interfaces between control plane network elements in FIG. 1(b) are point-to-point interfaces.

In the architecture shown in FIG. 1(b), names and functions of interfaces between network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver a control policy at a PDU session granularity and a control policy at a service data flow granularity.
(4) N8 is an interface between the AMF network element and the UDM network element, and may be used by the AMF network element to obtain subscription data and authentication data that are related to access and mobility management from the UDM network element, and used by the AMF network element to register information related to terminal device mobility management and the like with the UDM network element.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain subscription data related to session management from the UDM network element, and used by the SMF network element to register information related to a terminal device session and the like with the UDM network element.
(7) N11 is an interface between the SMF network element and the AMF network element, and may be configured to transfer PDU session tunnel information between the access network device and the UPF, transfer a control message sent to the terminal device, transfer radio resource control information sent to the access network device, and the like.
(8) N15 is an interface between the PCF network element and the AMF network element, and may be configured to deliver a terminal device policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be implemented by a plurality of devices, or may be one function module in one device. This is not specifically limited in embodiments of this application.

The mobility management network element, the session management network element, the data management network element, and the network repository function network element in this application may be respectively an AMF network element, an SMF network element, a UDM network element, and an NRF network element in a 5G system, or may be network elements that have functions of the AMF network element, the SMF network element, the UDM network element, and the NRF network element in future communication such as a 6G network. This is not limited in this application. In embodiments of this application, an example in which the AMF network element, the SMF network element, the UDM network element, and the NRF network element are respectively the mobility management network element, the session management network element, the data management network element, and the network repository function network element is used for description. In addition, the AMF network element, the SMF network element, the UDM network element, and the NRF network element are respectively referred to as an AMF, an SMF, a UDM, and an NRF for short.

For ease of description, in embodiments of this application, a specific example in which a base station and UE respectively serve as the access network device and the terminal device is used for description. A base station and UE that appear at any subsequent location may be respectively replaced with the access network device and the terminal device.

For ease of understanding content of this application, the following first describes a related background in embodiments of this application.

### 1. Quick UDP internet connections (quick UDP internet connections, QUIC) protocol:

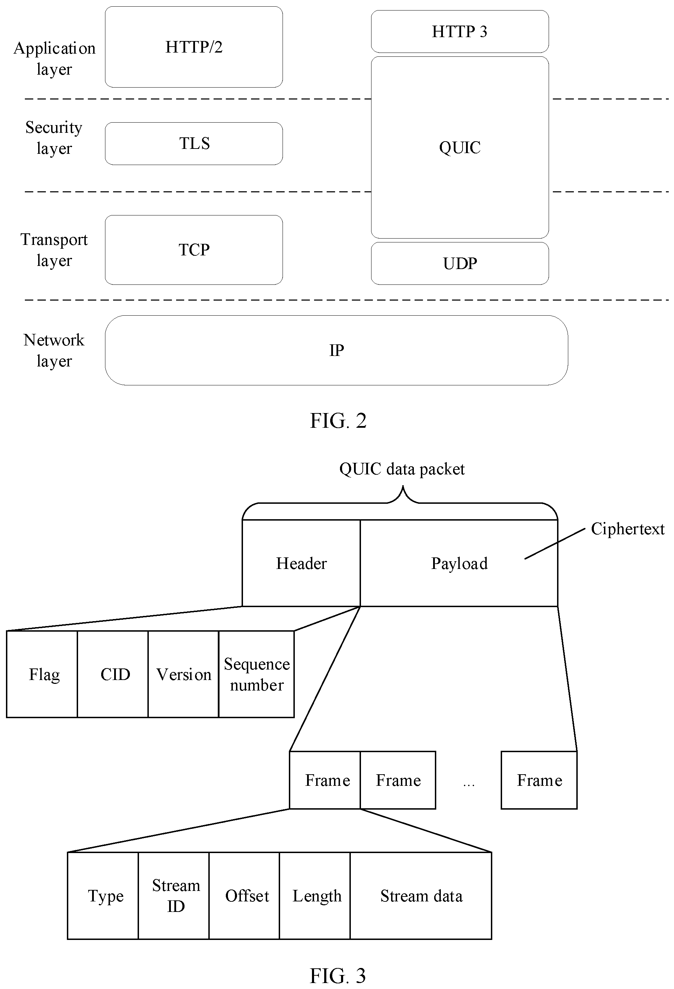

The QUIC protocol is a transmission protocol equivalent to the transmission control protocol (transmission control protocol, TCP). In a protocol stack structure shown in FIG. 2, the QUIC protocol is carried over a UDP protocol, and absorbs advantages of HTTP/2 API, TLS, and TCP in a design process. Objectives thereof are to optimize an overall delay and throughput, and improve performance during network switching.

A data packet using the QUIC protocol may be referred to as a QUIC data packet. As shown in FIG. 3, an encapsulation mode of the QUIC data packet includes a header and a payload (payload) (or referred to as load) part of the data packet, and complies with a principle of payload encryption and greatest-extent header encryption, to avoid a problem such as analysis or interception performed by network middleware on network traffic, and enhance data transmission security.

The header of the QUIC data packet includes a UDP header and a common (common) header, for example, includes at least one public flag (public flags), a connection identifier (connection ID, CID), a QUIC version (version), and a sequence number (sequence number). The CID may be used to associate same-link data.

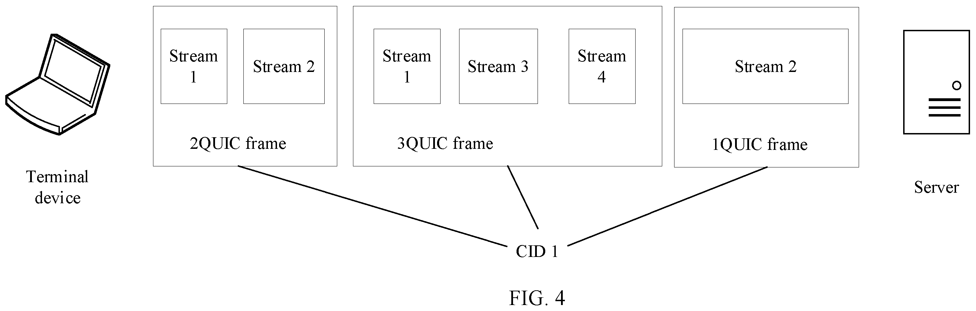

The payload part of the QUIC data packet is an encrypted ciphertext, and may be used to encapsulate frame (frame) data of a plurality of streams (stream). A frame may include a type, a stream identifier, an offset (offset) value, a data length, a stream payload (for example, including stream data), and the like. For example, as shown in FIG. 4, an example in which a terminal device and a server respectively serve as a transmit end and a receive end of a QUIC data packet is used. For a QUIC connection between the terminal device and the server, a QUIC data packet 1, a QUIC data packet 2, and a QUIC data packet 3 may be associated based on a CID 1. Data of a stream 1 and a stream 2 may be encapsulated in a frame (for example, represented as a 2QUIC frame) of the QUIC data packet 1, data of the stream 1, the stream 2, and a stream 3 may be encapsulated in a frame (for example, represented as a 3QUIC frame) of the QUIC data packet 2, and data of the stream 2 may be encapsulated in a frame (for example, represented as a 1QUIC frame) of the QUIC data packet 3.

It should be understood that FIG. 3 and FIG. 4 show merely example descriptions of a packet format of a QUIC data packet rather than any limitation. A width of a rectangular box is merely an example, and does not represent a length of content in the data packet. For example, during specific implementation, the QUIC data packet may be a long-header data packet, or may be a short-header data packet. The long-header data packet includes a source CID field and a target CID field. A target CID is specified by a receiver and is used to provide stable routing for the data packet, and a source CID is used by a peer end to set the target CID. These fields may be used to set a CID of a new connection. The short-header data packet includes only a target CID and an explicit length is omitted. A length of a target CID field is considered to be known by a peer end.

It should be noted that, in embodiments of this application, the QUIC protocol may be used as a target transport layer network protocol to establish a QUIC connection (or referred to as a QUIC tunnel, which is described in detail below) between a terminal device and an access network device. The QUIC connection may include at least one stream, and the at least one stream may be used to transmit data. Each stream in the QUIC connection may be carried by a stream or a datagram, and a data frame transmitted via each stream is included in a QUIC data packet. A QUIC data packet sent from the terminal device to the access network device may be referred to as an uplink data packet, and the uplink data packet may include uplink data frames of one or more streams. A QUIC data packet sent by the access network device to the terminal device may be referred to as a downlink data packet, and the downlink data packet may include downlink data frames of one or more streams.

When serving as a transmit end, the terminal device or the access network device may encapsulate, into a payload of a data frame of a corresponding stream, target data that needs to be transmitted via the stream, then encapsulate the data frame of the stream into a QUIC data packet, and send the QUIC data packet to a peer end. Correspondingly, when serving as a receive end, the access network device or the terminal device first decapsulates a QUIC data packet to obtain a data frame of a stream, and then decapsulates the data frame of the stream to obtain corresponding target data. In the following, a data packet of a stream transmitted between the terminal device and the access network device is specifically a QUIC data packet that includes a data frame of the stream. One QUIC data packet may include one or more data frames. Details are not distinguished and described one by one below.

### 2. QUIC tunnel and CID:

For example, a terminal device and a server serve as two endpoints using a QUIC protocol. Each QUIC connection (connection) between the terminal device and the server may also be referred to as a QUIC tunnel. "Tunnel" and "connection" may be used interchangeably below, which may generally have a group of CIDs, represented as CIDs. Each CID can identify the QUIC tunnel.

The CID may be independently selected by the terminal device, and each terminal device selects a CID for use by a peer end. A main function of the CID is to ensure that a data packet on a QUIC connection is not transmitted to an incorrect QUIC terminal device when an address change occurs in an underlying protocol (for example, a UDP protocol, an IP protocol, or a lower-layer protocol stack), so that perception-free connection migration of an application (application, APP) can be supported. The terminal device may select the CID in a manner of special implementation (and possibly special deployment), so that a data packet with the CID can be routed back to the terminal device, and can be correctly identified when being received.

The terminal device may maintain a CID set received from a peer end, and each CID may be used to send a QUIC data packet. The terminal device may limit use of the CID. For example, a same CID can be used only to send data packets from a same local address to a same destination address. When an address changes, the CID needs to be updated.

The terminal device may change, at any time during QUIC connection with the server, a CID for interaction between the terminal device and the peer end to another available CID. When the peer end performs connection migration, a CID published by the terminal device is consumed, that is, use of the CID is stopped. When the terminal device wants to stop use of a CID, the terminal device may send a CID cancellation frame to the peer end. Sending the CID cancellation frame means that the CID is not used again. In addition, the peer end is requested for a change to a new CID through a new CID frame.

For example, a long-header data packet is used as an example. During a handshake, a QUIC data packet with a long header is used to set a CID to be used by both ends. A source CID of each end is used as a target CID of a data packet sent to the end. After processing a first initial data packet, each end sets a target CID field value of a subsequently sent data packet to a source CID field value received by the end.

When the terminal device does not receive an initial data packet or a retry data packet from the server before sending an initial data packet, the terminal device generates an unpredictable value to fill a target CID field of the sent initial data packet. A length of the target CID needs to be at least 8 bytes. A client on the terminal device needs to use the same target CID on one connection until a data packet from the server is received.

The client may select a value to fill a source CID field and set a source CID length field to identify a length. A first 0-RTT data packet sent by the client uses a source CID and a target CID that are consistent with those for the first initial data packet sent by the client.

After receiving an initial data packet or a retry data packet from the server for the first time, the client uses a source CID provided by the server as a target CID of a subsequently sent data packet, including any 0-RTT packet. This means that the client may need to change the value of the target CID field twice in a connection establishment phase: One is to respond to the retry data packet sent by the server, and the other is to respond to the initial data packet sent by the server. Once the client receives a valid initial data packet from the server, the client needs to discard any data packet with a different source CID value subsequently received on the connection.

After receiving the first initial data packet or the first retry data packet, the client needs to change a target CID value for a subsequently sent data packet. The server needs to set, based on the first initial data packet received, a target CID for sending a data packet. Any subsequent change to the target CID is allowed through only a value carried in a new CID frame. If a subsequent initial data packet contains a different source CID, the packet needs to be discarded. This avoids unpredictable results that may be caused by stateless processing of a plurality of initial data packets with different source CIDs.

Embodiments of this application are concerned with only negotiation and use of a CID of a QUIC connection between UE and a RAN, and are not concerned with a data packet format.

### 3. Access traffic steering, switching, and splitting (access traffic steering, switching, and splitting, ATSSS) rule:

The ATSSS rule specifies overall technical requirements for core network access traffic steering, switching, and splitting functions in a 5G mobile communication network, including new technical function requirements of network elements such as a PCF, an AMF, an SMF, a UPF, and an NRF relative to 5G network functions and interfaces.

An access traffic steering process is a stream steering process. An access network is selected for a new data stream, and traffic of the service stream is transmitted on the specified access network. Access traffic steering is applicable between 3rd generation partnership project (3rd generation partnership project, 3GPP) access and non-3GPP (Non-3GPP) access.

An access traffic switching process is a stream switching process. All traffic of an ongoing service stream is switched from one access network to another access network in a manner of maintaining service stream continuity. Access traffic switching is applicable between 3GPP access and non-3GPP access.

An access traffic splitting process is a stream division or segmentation process, and is a process of splitting a service data stream (dividing or segmenting the stream) among a plurality of access networks. When traffic splitting (stream division or segmentation) is applied to a data stream, some traffic of the data stream is transmitted through one access, and the other traffic of the same data stream is transmitted through another access. Access traffic splitting is applicable between 3GPP access and non-3GPP access.

In embodiments of this application, a terminal device may control traffic steering according to the ATSSS rule. For example, the terminal device determines, according to the ATSSS rule, that a data stream of a service is transmitted by using only a 3GPP access technology, or is transmitted by using only a non-3GPP access technology, or is transmitted by using both a 3GPP access technology and a non-3GPP access technology, that is, steered by using two access technologies.

### 4. Radio bearer (Radio Bearer, RB):

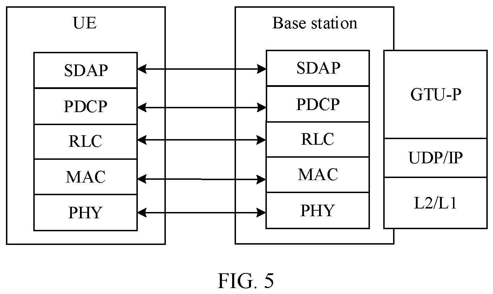

The radio bearer is a general term of a series of protocol entities and configurations allocated by a base station to UE, including a series of resources allocated by a radio resource control (radio resource control, RRC) or service data adaptation protocol (service data adaptation Protocol, SDAP) protocol entity, a packet data convergence protocol (packet data convergence protocol, PDCP) entity, a radio link control (radio link control, RLC) protocol entity, a medium access control (medium access control, MAC) protocol entity, and a physical layer (physical layer, PHY). A protocol stack architecture is shown in FIG. 5. Radio bearers are classified into a data radio bearer (data radio bearer, DRB) and a signaling radio bearer (signaling radio bearer, SRB). The former is for carrying data, and the latter is for carrying a signaling message.

In embodiments of this application, one DRB may carry at least one QUIC tunnel. Each QUIC tunnel may be associated with at least one CID.

### 5. Protocol data unit (protocol data unit, PDU) session:

One of key tasks of 5GS session management is to provide a terminal device with a data connection to a DN. To establish the connection from the terminal device to the DN, a PDU session needs to be established. The PDU session is a logical connection between the terminal device and a specific DN, and provides the terminal device with a user plane connection to the DN. A "PDU" is a basic user protocol type carried in the PDU session, and may be an IP data packet or an Ethernet frame depending on a PDU session type. Currently, a 5GS supports three PDU session types: an IP-based PDU session type, an Ethernet PDU session type, and an unstructured PDU session type. A "PDU" carried in an IP-based PDU session is an IP data packet, and a "PDU" carried in an Ethernet PDU session is an Ethernet frame. The 5GS does not interpret a "PDU" carried in an unstructured PDU session.

In a PDU session establishment process, a corresponding user plane connection between the terminal device and the DN is activated. The user plane connection provides PDU transmission between the terminal device and the DN, and carries actual data such as a voice and a video. One terminal device may request to simultaneously establish a plurality of PDU sessions, and the plurality of PDU sessions may be connected to different DNs. For example, when UE needs an Internet connection and an IMS service simultaneously, a PDU session from the terminal device to the Internet and a PDU session from the terminal device to an IMS may be simultaneously established. In addition, one terminal device may simultaneously request a single DN to establish a plurality of PDU sessions.

### 6. Quality of service (quality of service, QoS):

QoS intends to provide end-to-end quality of service guarantee for different requirements of various services. QoS is a tool for effectively using network resources, and allows different traffic to compete for network resources in an unequal manner. Voice, videos, and important data applications can be preferentially served on a network device. Factors that affect network quality include a bandwidth, a delay, a delay jitter, a packet loss rate, and the like. These factors affecting network service quality can all be used as QoS metrics.

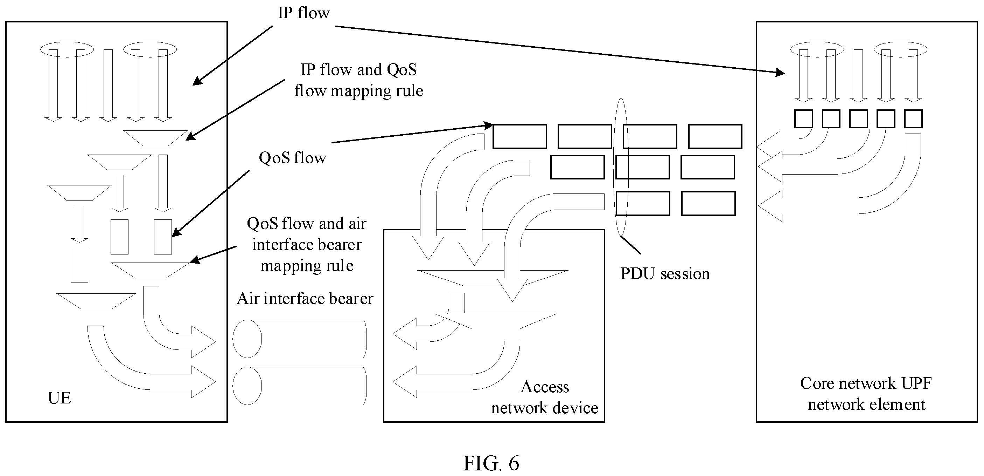

QoS management is supported in both NSA (Non-Standalone) networking and SA (Standalone) networking. However, in SA networking, the concept of bearer is not used between a base station and a core network. Instead, an evolved packet system (evolved packet system, EPS) bearer in NSA networking changes to a QoS flow (flow). Each QoS flow is identified by one QoS flow identifier (QoS flow ID, QFI). In a PDU session, a QFI of each QoS flow is unique. A core network notifies a base station of an identifier (5G QoS identifier, 5QI) corresponding to each QoS flow, to determine a QoS attribute of the QoS flow. The base station needs to map the QoS flow to a DRB. The QoS flow and an air interface radio bearer may be in a many-to-one mapping relationship, or may be in a one-to-one mapping relationship, as shown in FIG. 6.

### 7. QoS mapping rule:

Based on a protocol stack architecture shown in FIG. 5, when data transmission is performed between a base station and UE, functions of an SDAP protocol layer include the following two aspects:
(1) A quality of service QoS flow (flow) identifier (QoS Flow ID, QFI) is added to a data packet, and a receiver reads the QFI from an SDAP header of the data packet.
(2) One or more QoS flows are mapped to one DRB.

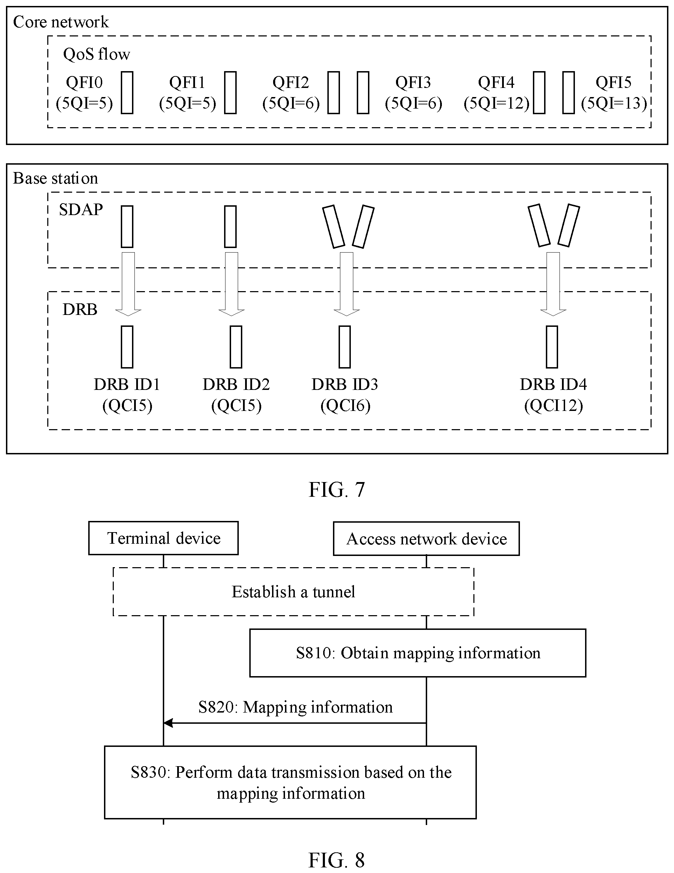

As shown in FIG. 7, there may be a plurality of QoS flows with a same 5QI in a system, and the QoS flows with the same 5QI may be mapped to a same DRB. Alternatively, QoS flows with different 5QIs may be mapped to a same DRB.

A base station side needs to map a QoS flow to a corresponding DRB, so that downlink data can be sent to the UE through a corresponding bearer. For downlink data, when a QoS flow passes through an SDAP layer, the SDAP layer maps each QoS flow to a corresponding DRB based on a mapping relationship between an NR 5QI network management configuration value and a QoS class identifier (class identifier, QCI).

To send data to the base station, the UE also needs to find a corresponding DRB. A current QoS mapping rule is based on two layers of mapping: IP flow <-> QoS flow <-> DRB, as shown in FIG. 6. For uplink data, when an IP flow from an upper-layer application layer passes through the SDAP layer, the SDAP layer encapsulates the IP flow into an uplink data packet of a corresponding QoS flow based on the QoS mapping relationship, and sends the uplink data packet to the base station through the DRB.

A protocol stack between the UE and an access network device (for example, a RAN) is complex. Especially when traffic data like a QUIC data packet is transmitted, a plurality of streams at the application layer are multiplexed (multiplex) onto one QUIC data packet. An existing QoS mapping mechanism cannot satisfy differentiated transmission of data carried over QUIC. Therefore, after the QUIC protocol is introduced, a QoS mapping rule needs to be redesigned.

Embodiments of this application provide a data transmission method, an apparatus, and a system, to design a QoS mapping mechanism for a QUIC protocol applicable to UE and an access network device, so as to better transmit QUIC-like traffic. The method and the apparatus are based on a same technical concept. Because problem-resolving principles of the method and the apparatus are similar, mutual reference may be made to implementations of the apparatus and the method, and repeated parts are not described again. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

It should be noted that, in embodiments of this application, "at least one" refers to one or more, and "a plurality of" refers to two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit priorities or importance of the plurality of objects. For example, a first access network device and a second access network device are merely used to distinguish between different access network devices, but do not indicate different priorities, importance, or the like of the two devices. For example, in some embodiments, method steps performed by the first access network device and the second access network device may be exchanged. For example, in a handover scenario, the first access network device may serve as a source access network device of UE, and the second access network device may serve as a target access network device of the UE. On the contrary, the first access network device may serve as a target access network device of the UE, and the second access network device may serve as a source access network device of the UE.

FIG. 8 is a schematic flowchart of a data transmission method according to an embodiment of this application.

As shown in FIG. 8, the data transmission method may include the following steps.

S810: An access network device obtains mapping information.

In this embodiment of this application, the mapping information may indicate a mapping relationship between a tunnel, a DRB, and a QoS flow. There may be at least one tunnel between the access network device and a terminal device, any one of the at least one tunnel may include at least one stream, and the at least one stream may be used to transmit data.

Any one of the at least one tunnel may use a target transport layer network protocol, and the target transport layer network protocol includes the QUIC protocol described above, or may include another transport layer network protocol similar to the QUIC protocol. For ease of description below, the target transport layer network protocol is referred to as a tunneling protocol for short, and a data packet that uses the target transport layer network protocol is referred to as a tunneling protocol data packet. The tunneling protocol data packet may include data frames of one or more streams. When the QUIC protocol is used, the stream on the tunnel may be carried by a stream or a datagram.

For ease of differentiation, in embodiments of this application, one or more data streams transmitted between the terminal device and the access network device through a tunnel using the target transport layer network protocol are referred to as streams. The tunnel and the stream may be carried on an air interface DRB between the terminal device and the access network device. For an encapsulation mode of the stream or a data packet of the tunnel, refer to the foregoing related descriptions. Details are not described herein again. A plurality of data streams transmitted between the terminal device and a core network (for example, a core network gateway device) are referred to as QoS flows. The QoS flow satisfies a corresponding QoS requirement. The QoS flow includes an air interface part between the terminal device and the access network device and a part between the access network device and the core network gateway device. An implementation of a mapping relationship between a QoS flow and a tunnel, or a stream on a tunnel, or a DRB is described below. Details are not described herein.

Before S810 is implemented, in an optional implementation, the terminal device may initiate a session establishment process, and negotiate, in the session establishment process, information about the tunnel between the terminal device and the access network device, for example, a first address of the tunnel and attribute information of the tunnel. Alternatively, a network side may initiate a session modification process, and the access network device and the terminal device may negotiate information about the tunnel, for example, a first address of the tunnel and attribute information of the tunnel, in the session modification process. Alternatively, the access network device may obtain the mapping information in another process. This is not limited in this embodiment of this application.

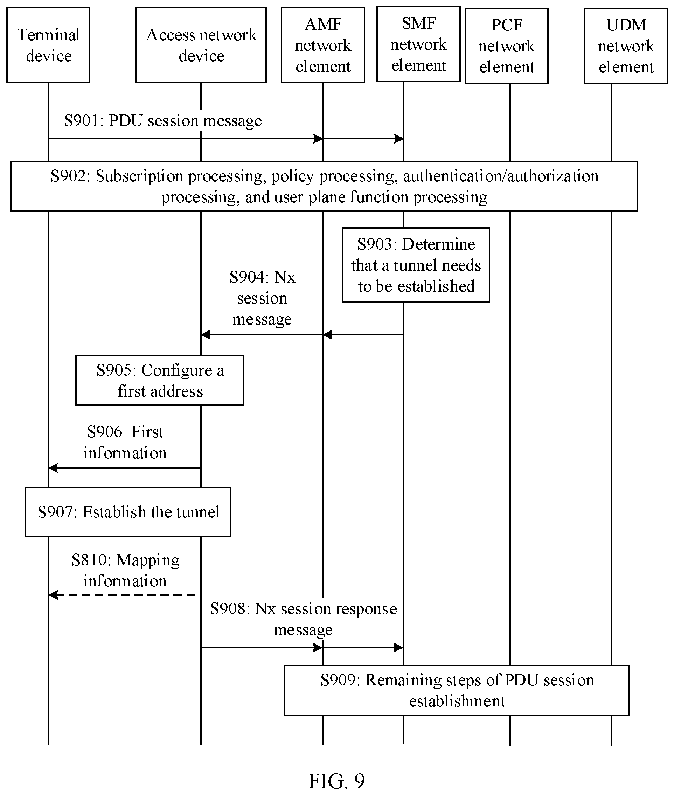

For example, the terminal device initiates a session establishment process. As shown in FIG. 9, the tunnel establishment process may include the following steps.

S901: The terminal device sends a session message to an SMF network element through an AMF network element. The session message may be specifically a session establishment message, and indicates to establish a session for the terminal device, for example, establish a PDU session. Alternatively, the session message may be specifically a session modification message, and indicates to modify a session, for example, modify a PDU session.

Correspondingly, the AMF network element may receive the session message from the terminal device, and forward the session message to the SMF network element. The "forwarding" herein may be understood as "transparent transmission". To be specific, the AMF network element performs only format conversion on the session message from the terminal device, to send, to the SMF network element, content that the terminal device expects to send to the SMF network element. The AMF network element does not parse the session message from the terminal device. All descriptions of "forwarding" below may be understood as "transparent transmission", and are not distinguished and repeated one by one.

In this embodiment of this application, the session message may be represented as a first non-access stratum message. The session message may include first indication information. The first indication information may indicate that the terminal device supports the target transport layer network protocol, or the first indication information indicates that the terminal device supports multipath communication performed based on the target transport layer network protocol. The terminal device may send the session message to the AMF network element through an N1 interface. The AMF network element sends the session message to the SMF network element through an N11 interface. The SMF network element may receive the session message from the AMF network element, and obtain the first indication information from the session message. The SMF network element may analyze, based on the first indication information, whether establishment of the tunnel using the target transport layer network protocol is supported between the terminal device and the access network device.

In an optional implementation, the session message from the terminal device may be represented as a second non-access stratum message, the session message may include second indication information, and the second indication information indicates to establish the tunnel between the terminal device and the access network device. The second indication information may be an explicit indication or an implicit indication. In a case of the explicit indication, the second indication information may be, for example, a request indicator (request indicator), indicating a request or a need to establish the tunnel between the terminal device and the first access network device. In a case of the implicit indication, the second indication information may be, for example, description information of a service requirement. If the description information of the service requirement provides a description that a service on the terminal device side needs a stable latency, it may be considered as an implicit indication that the tunnel using the target transport layer network protocol needs to be established between the terminal device and the access network device.

It should be understood that, in this embodiment of this application, the first indication information and the second indication information may be carried in a same message, or may be carried in different messages. This is not limited in this embodiment of this application.

S902: The terminal device, the access network device, and a plurality of network elements (for example, including the AMF network element, the SMF network element, a PCF network element, and a UDM network element) of the core network perform subscription processing, policy processing, authentication/authorization processing, user plane function processing, and the like. For specific implementation details, refer to a related standard document of 3GPP. Details are not described herein.

S903: The SMF network element determines that the tunnel needs to be established between the terminal device and the access network device.

In this embodiment of this application, the SMF network element may determine, based on content in the session message received from the terminal device in S901, that the tunnel needs to be established between the terminal device and the access network device. For example, when the session message carries the second indication information, the SMF network element may determine, based on the second indication information, that the tunnel needs to be established between the terminal device and the access network device. Alternatively, for example, when the session message carries the first indication information, the SMF network element may further obtain tunnel capability information of the access network device. If both the terminal device and the access network device can support the target transport layer network protocol, or support multipath communication performed based on the target transport layer network protocol, the SMF network element may determine that the tunnel needs to be established between the terminal device and the access network device.

Alternatively, in an implementation process of S902, the SMF network element may determine, by interacting with the terminal device, the access network device, or another core network element, that the tunnel needs to be established between the terminal device and the access network device. For example, in the implementation process of S902, the SMF network element may further receive other request information, for example, DNN information or slice information, from the terminal device, and the SMF network element may determine, with reference to the DNN information or the slice information, that the tunnel needs to be established between the terminal device and the access network device. Alternatively, for example, in the implementation process of S902, the SMF network element may further determine, based on policy information received from the PCF network element or subscription information received from the UDM network element, that the tunnel needs to be established between the terminal device and the access network device.

S904: The SMF network element sends an Nx session message to the access network device through the AMF network element. Correspondingly, the access network device receives the Nx session message from the SMF network element.

In this embodiment of this application, the SMF network element may send an N11 session message to the AMF network element through an N11 interface, and the N11 session message may carry tunnel address configuration indication information. The AMF network element sends an N2 session message to the access network device through an N2 interface, and the N2 session message may carry the tunnel address configuration indication information. The tunnel address configuration indication information is used to request the access network device to configure the first address of the tunnel, or it is understood that the tunnel address configuration indication information indicates the access network device to configure the first address of the tunnel for the terminal device.

In an optional implementation, the tunnel address configuration indication information from the SMF network element may be represented as second indication information, and the second indication information indicates to establish the tunnel between the terminal device and the access network device. The second indication information may be carried in a fourth non-access stratum message from the SMF network element. The fourth non-access stratum message may be a newly added control plane message. The SMF network element may send the fourth non-access stratum message to the AMF network element through the N11 interface, and the AMF network element may send the fourth non-access stratum message to the access network device through the N2 interface.

In an optional implementation, the Nx session message from the SMF network element may further include a QoS rule.

S905: The access network device configures the first address of the tunnel for the terminal device based on related indication information from the SMF network element.

In an optional implementation, the tunnel address configuration indication information from the SMF network element may be represented as fourth indication information, and the fourth indication information indicates to configure the first address of the tunnel. The access network device may further determine, based on the fourth indication information and an agreement in the target transport layer network protocol, that a default mode is an attribute of the tunnel. The attribute may include, for example, any one of the following transmission modes: a data packet mode, a stream mode, or a security mode.

In another optional implementation, the tunnel address configuration indication information from the SMF network element may be represented as third configuration information, and the third configuration information may include attribute information of the tunnel. During implementation of S905, the access network device may further obtain an attribute of the tunnel from the third configuration information. The attribute may include, for example, any one of the following transmission modes: a data packet mode, a stream mode, or a security mode.

S906: The access network device sends first information to the terminal device. Correspondingly, the terminal device receives the first information, and may feed back response information for the first information to the access network device.

In this embodiment of this application, the first information may include the first address of the tunnel. In another optional implementation, the first information may further include the attribute information of the tunnel, and the attribute may include, for example, any one of the following transmission modes: a data packet mode, a stream mode, or a security mode.

S907: Establish the tunnel using the target transport layer network protocol between the terminal device and the first access network device. Then, the terminal device may perform data transmission with the access network device based on the tunnel. The tunnel may be used to ensure quality of communication between the terminal device and the access network device.

In an implementation, the terminal device may initiate S907 based on received information. In another implementation, the access network device may initiate S907 based on received information. For specific implementation details of S907, refer to a connection establishment process in the target transport layer network protocol, for example, a connection establishment process in a QUIC protocol. Details are not described herein.

S908: The first access network device feeds back an Nx session response message to the SMF network element through the AMF network element. Correspondingly, the SMF network element receives the Nx session response message from the first access network device.

S909: The SMF network element and another core network element perform remaining steps of PDU session establishment. For specific implementation details, refer to a related standard document of 3GPP. Details are not described herein.

It should be understood that FIG. 9 is merely an example description of an interaction process that may be involved when the tunnel is established between the terminal device and the access network device, rather than any limitation. In another embodiment, the terminal device may exchange information related to tunnel establishment in another exchange manner with the access network device and/or the core network element. Details are not described herein. In an optional implementation, based on a device capability, tunnels using the target transport layer network protocol may be further established between the terminal device and different access network devices in a dual connectivity (dual connection, DC) scenario, a mobile handover scenario, or the like. Details are not described herein.

At any moment before the terminal device performs data transmission with the access network device based on the tunnel, the access network device may perform S810 to obtain the mapping information.

For example, the access network device may obtain the mapping information from the Nx session message when receiving the Nx session message in S904. Alternatively, when interacting with another core network element, the access network device may obtain the mapping information from exchanged information, or determine the mapping information based on exchanged information. For example, the access network device may determine the mapping information based on QoS profile information from the core network. A manner of obtaining the mapping information is not limited in this embodiment of this application.

S820: The access network device sends the mapping information to the terminal device. Correspondingly, the terminal device receives the mapping information.

In this embodiment of this application, for example, S820 may be performed after S907 and before S908 shown in FIG. 9, or may be performed after S908 and before S909. This is not specifically limited in this embodiment of this application.

The access network device may send the mapping information to the terminal device by using access stratum signaling (access signal, AS). The AS signaling may be newly added AS signaling between the access network device and the terminal device, or may reuse existing AS signaling. For example, the mapping information is carried in a reserved field of the existing AS signaling, or the mapping information is carried in a newly added information element, or another information element in the existing AS signaling is replaced with the mapping information.

S830: The access network device and the terminal device perform data transmission based on the mapping information. For example, the access network device performs data transmission with the terminal device based on the mapping information. Similarly, the terminal device performs data transmission with the access network device based on the mapping information.

During specific implementation, the access network device may receive an uplink data packet based on the mapping information, and/or send a downlink data packet based on the mapping information. Specifically, for example, the access network device may map data of a downlink QoS flow from the core network to one or more tunnel-based streams between the access network device and the terminal device, or map uplink data of one or more tunnel-based streams from the terminal device to a QoS flow.

Similarly, the terminal device may send an uplink data packet based on the mapping information, and/or receive a downlink data packet based on the mapping information. Specifically, for example, the terminal device may receive, based on the mapping information, a tunnel-based tunneling protocol data packet including downlink data frames of one or more streams from the access network device, and decapsulate the tunneling protocol data packet; or encapsulate, based on the mapping information, data delivered by an upper-layer protocol into a tunnel-based tunneling protocol data packet including uplink data frames of one or more streams, and send the tunneling protocol data packet to the access network device.

During specific implementation, the mapping information may have a plurality of implementations. Based on different implementations of the mapping information, a mapping process during data transmission between the access network device and the terminal device based on the tunnel varies. For ease of understanding, the following separately describes different implementations with reference to the accompanying drawings and embodiments.

It should be noted that, in the following, an uplink data packet of a corresponding stream transmitted between the terminal device and the access network device based on the tunnel may be replaced with an uplink data frame of the corresponding stream, and a downlink data packet of a corresponding stream may be replaced with a downlink data frame of the corresponding stream. A format of data transmitted through a stream on the tunnel is not limited in this embodiment of this application. In addition, when mapping between a stream on the tunnel and a QoS flow is implemented, an identifier QFI of the corresponding QoS flow may be added to a header of a data frame of the stream on the tunnel, or may be added to a control information part of a data packet including the data frame of the stream. For example, a QFI 1 may be added to a header of a frame of a stream on a tunnel that carries QoS flow data, or a QFI may be added to a header of a tunneling protocol data packet into which a data frame of a stream on a tunnel is encapsulated, or a QFI is encapsulated into independent tunneling protocol control information (for example, a QUIC control frame), and the control information and the data frame of the stream on the tunnel are encapsulated in a same tunneling protocol data packet. A location for carrying the QFI is not limited in this embodiment of this application. The foregoing examples are all applicable to different embodiments below, and similar parts may not be described below again.

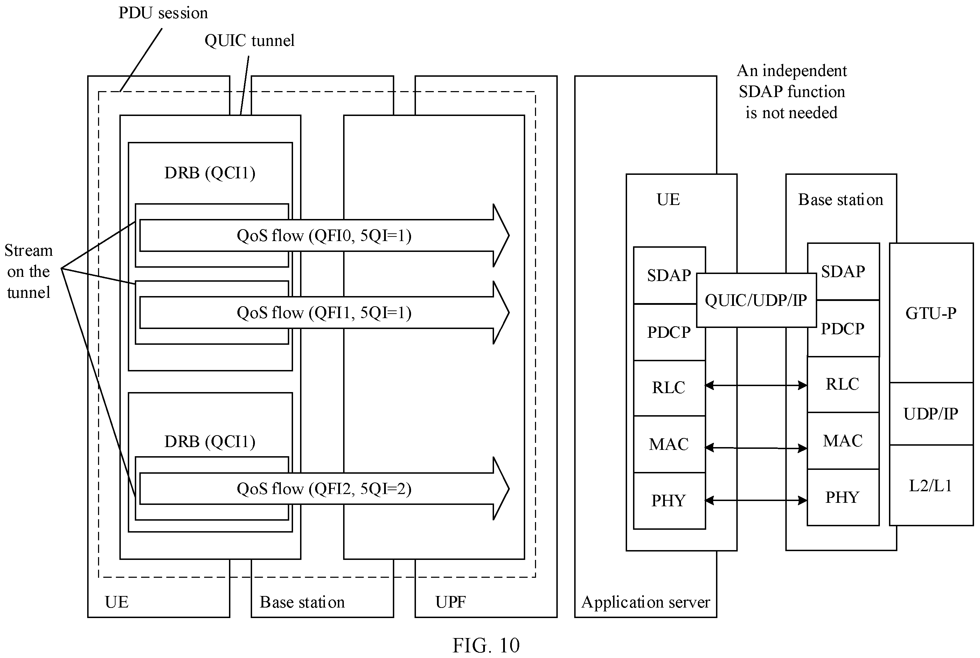

In the following example, it is assumed that no independent SDAP function is needed. For example, original SDAP and PDCP security and reordering features of an air interface are no longer needed, or it is understood that SDAP and PDCP security and reordering features are combined into a new air interface protocol layer (or it is understood that the new air interface protocol layer is directly above the PDCP). The new protocol layer may be a QUIC layer, and another layer feature of the PDCP, such as IP header compression, is still retained. In this case, a mapping model may be shown in FIG. 10. Alternatively, it is understood that the QoS flow or the QFI is terminated at the access network device, and the terminal device is aware of only a stream ID. That is, on a terminal device side, a stream on a tunnel is mapped to a QoS flow in a 1:1 manner. Data of different streams on the tunnel may be carried on different DRBs.

Examples are described as follows:
(1) Manner 1: A stream on the tunnel is mapped to a QoS flow in a 1:1 manner, and the mapping information includes a mapping relationship between a QoS flow and a stream on the tunnel and a mapping relationship between the stream on the tunnel and a DRB.

In Manner 1, the mapping information includes a mapping relationship between a single QoS flow and a single stream on the tunnel, and a mapping relationship between a single stream on the tunnel and a DRB. A single stream on the tunnel may be identified by using a stream ID, or a single stream on the tunnel may be identified by using a CID. This is not limited in this embodiment of this application.

The QUIC protocol is used as an example. In an example, the mapping information may include the following content:

```
Precedence = 1
           QUIC selection descriptor:
           Stream ID #1 or CID #1 (including a source CID and a target CID);
           QFI = 3;
           DRB = #1.
```

This indicates that the stream #1 (the CID #1 used for the stream #1) is mapped to the QFI 3, and the stream ID #1 is transmitted on the DRB #1.

In another example, the mapping information may include the following content:

```
Precedence = 1
           QUIC selection descriptor:
           Stream ID #1 or CID #1 (including a source CID and a target CID);
           QFI = 3; and
           Precedence = 1
           QUIC selection descriptor:
           QFI = 3;
           DRB = #1.
```

The access network device may separately send the mapping relationship between a single QoS flow and a single stream on the tunnel to the terminal device, or separately send the mapping relationship between a single QoS flow and a DRB to the terminal device. For example, the mapping relationship between a single QoS flow and a single stream on the tunnel is carried in one piece of AS signaling, and the mapping relationship between a single QoS flow and a DRB is carried in another piece of AS signaling. Content of the mapping information and a manner of delivering the mapping information are not limited in this embodiment of this application.

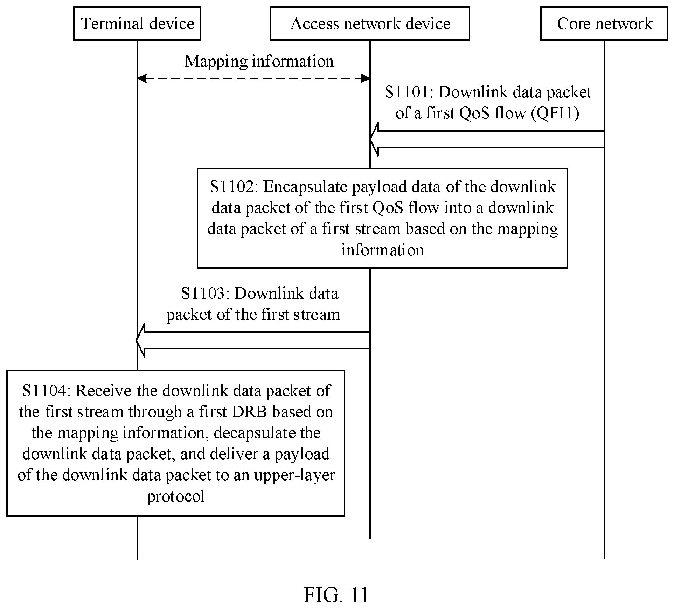

Based on the mapping information, when downlink data transmission is performed between the access network device and the terminal device, including sending, by the access network device, a tunneling protocol data packet to the terminal device, as shown in FIG. 11, the following steps may be included.

S1101: The core network sends a downlink data packet of a first QoS flow to the access network device. The core network may be specifically a user plane gateway function of the core network. For example, an identifier of the first QoS flow may be represented as a QFI 1. Correspondingly, the access network device receives the downlink data packet of the first QoS flow.

S1102: The access network device encapsulates payload data of the downlink data packet of the first QoS flow into a downlink data packet of a first stream based on the mapping information.

For example, a GTU-P protocol is used on a core network side. During implementation of S1102, the access network device needs to first remove a GTU-P header, and then encapsulate the payload data of the downlink data packet of the first QoS flow into the downlink data packet/frame of the first stream based on a mapping relationship that is between a QFI and a stream and that is indicated by the mapping information. A frame (Frame) header of the downlink data packet of the stream includes information about a stream ID #1. In addition, the frame is encapsulated into a tunneling protocol data packet, and a CID (for example, represented as a CID #1, including a source CID #1 and a target CID #1) of the tunnel is used in a header of the tunneling protocol data packet.

S1103: The access network device sends, based on a mapping relationship that is between a stream and a DRB and that is indicated by the mapping information, the downlink data packet of the first stream to the terminal device through a first DRB (for example, represented as a DRB #1) corresponding to the first stream. Specifically, the access network device may send, to the terminal device, a tunneling protocol data packet that includes the downlink data packet of the first stream. Correspondingly, the terminal device receives the downlink data packet of the first stream through the first DRB based on the mapping information, for example, receives the tunneling protocol data packet including the downlink data packet of the first stream.

S1104: The terminal device delivers, to the tunnel, the downlink data packet that is of the first stream and that is received from the first DRB, decapsulates the downlink data packet of the first stream based on the mapping information, and delivers a payload of the downlink data packet to an upper-layer protocol.

Specifically, the terminal device may deliver, to the tunnel, the tunneling protocol data packet that is received from the first DRB and that includes the downlink data packet of the first stream, then decapsulate the tunneling protocol data packet based on the mapping information to obtain the downlink data packet/frame of the first stream, and deliver the payload of the downlink data packet/frame of the first stream to the upper-layer protocol.

For example, the upper-layer protocol may be an IP protocol. During implementation of S1104, the terminal device may demultiplex payload data in a stream into a plurality of IP flows based on a mapping relationship between the stream and the IP flow, and deliver the IP flows to an upper-layer application layer. Alternatively, the terminal device may demultiplex payload data in a stream into a plurality of IP flows based on a mapping relationship between the IP flow and a QFI and a mapping relationship between the QFI and the stream, and deliver the IP flows to an upper-layer application layer. In this case, intermediate mapping from the stream to the QFI and intermediate mapping from the QFI to the IP flow may be retained inside the terminal device. In this embodiment of this application, mapping from the QFI to the IP flow does not need to be modified greatly, and the mapping process needs to be enhanced only inside the terminal device. The mapping relationship between the stream and the IP flow may be, for example, sent by the access network device to the terminal device. Specifically, the mapping relationship between the stream and the IP flow may be carried in a PDU session accept message sent by the access network device to the terminal device in a session establishment process. Alternatively, the mapping relationship between the stream and the IP flow may be sent by the access network device to the terminal device in a tunnel establishment process or after tunnel establishment; or may be sent by a core network device (for example, an SMF network element) to the terminal device. An implementation in which the terminal device obtains the mapping relationship (direct or indirect mapping relationship) between the stream and the IP flow is not limited in this embodiment of this application. Details are not described in the following embodiments.

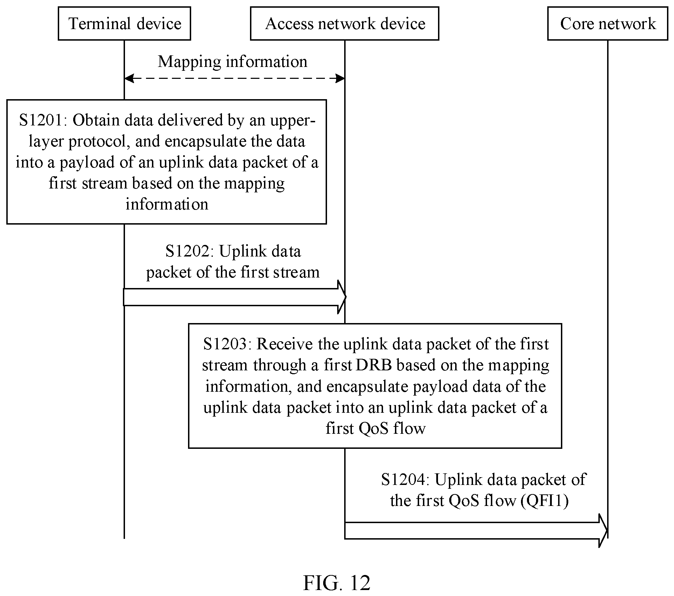

Based on the mapping information, when uplink data transmission is performed between the access network device and the terminal device, including sending, by the terminal device, a tunneling protocol data packet to the access network device, as shown in FIG. 12, the following steps may be included.

S1201: The terminal device obtains data delivered by an upper-layer protocol, and encapsulates the data into a payload of an uplink data packet of a first stream based on the mapping information.

For example, the upper-layer protocol may be an IP protocol. During implementation of S1201, the terminal device may encapsulate, based on a mapping relationship between an IP flow and a QFI and a mapping relationship between a QFI and a stream, or based on a mapping relationship between an IP flow and a stream, the data delivered by the upper-layer protocol into frame data of a stream, that is, into the payload of the uplink data packet/frame of the first stream, and use a stream identifier, for example, a stream ID, of the first stream in a header of the uplink data packet/frame of the first stream. Then, the uplink data packet of the first stream is encapsulated into a tunneling protocol data packet, and a CID (for example, represented as a CID #1, including a source CID #1 and a target CID #1) of the tunnel is used in a header of the tunneling protocol data packet. A single stream on the tunnel may be identified by using a stream ID. If a single tunnel includes only one stream, any tunnel identifier CID may identify a stream on the tunnel. If a single tunnel includes a plurality of streams, different CIDs may be used to identify different streams. This is not limited in this embodiment of this application.

S1202: The terminal device sends, based on a mapping relationship that is between a stream and a DRB and that is indicated by the mapping information, the uplink data packet of the first stream to the access network device through a first DRB corresponding to the first stream, including sending the tunneling protocol data packet including the uplink data packet/frame of the first stream. Correspondingly, the access network device receives the uplink data packet of the first stream through the first DRB based on the mapping information, including receiving the tunneling protocol data packet including the uplink data packet/frame of the first stream.

S1203: The access network device encapsulates payload data of the uplink data packet of the first stream into an uplink data packet of a first QoS flow based on the mapping information.

For example, an identifier of the first QoS flow may be represented as a QFI 1, and the uplink data packet of the first QoS flow may be, for example, a GTP-U data packet. For an encapsulation mode of the GTP-U data packet, refer to a related standard file of 3GPP. Details are not described herein.

After the uplink data packet from the first DRB is received, specifically, after the tunneling protocol data packet from the first DRB is received and the tunneling protocol data packet includes the uplink data packet of the first stream, the access network device may identify an identifier of the first stream or a tunnel identifier in the tunneling protocol data packet, then encapsulate the payload data (for example, a payload part in a QUIC stream frame) of the uplink data packet of the first stream into the uplink data packet of the first QoS flow based on a mapping relationship that is between a stream and a QoS flow and that is indicated by the mapping information, and add the identifier, for example, the QFI 1, of the first QoS flow to a header (for example, a GTP header) of the uplink data packet of the first QoS flow.

S1204: The access network device sends the uplink data packet of the first QoS flow to a core network device. Correspondingly, the core network device receives the uplink data packet of the first QoS flow from the access network device.

Therefore, according to the methods shown in FIG. 11 and FIG. 12, when data transmission is performed between the terminal device and the access network device by using the target transport layer network protocol, an air interface can identify a granularity of a stream on a tunnel, to perform QoS management on the stream, so as to perform differentiated transmission on a corresponding DRB and QoS flow.

(2) Manner 2: A stream on the tunnel is mapped to a DRB in a 1:1 manner, and the mapping information includes a mapping relationship between a plurality of QoS flows and a single stream on the tunnel and a mapping relationship between a single stream on the tunnel and a DRB.

In Manner 2, the access network device and the terminal device may exchange the mapping information in a session establishment process in a manner shown in FIG. 9. For this process, refer to related descriptions in FIG. 9. Details are not described herein again. A difference lies in that content of the mapping information exchanged in Manner 2 is different from that in Manner 1. In Manner 2, the mapping information includes the mapping relationship between a plurality of QoS flows and a single stream on the tunnel and a mapping relationship between a single stream on the tunnel and a DRB. A single stream on the tunnel may be identified by using a stream ID, or a single stream on the tunnel may be identified by using a CID. This is not limited in this embodiment of this application. Then, data transmission may be performed between the terminal device and the access network device based on content indicated by the mapping information.

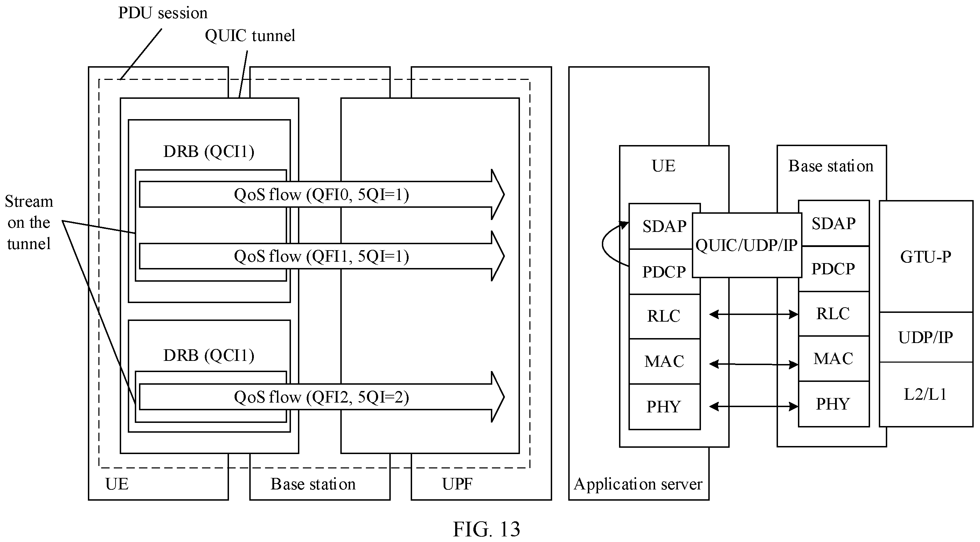

In Manner 2, a mapping model is shown in FIG. 13. Data transmitted in a plurality of QoS flows may be transmitted in a same stream on the tunnel, and each DRB may carry data of one stream on the tunnel. In other words, the QoS flows and the stream on the tunnel are in a many-to-one mapping relationship. It should be noted herein that, in Manner 2, it only indicates that data transmitted in a plurality of QoS flows may be transmitted in a same stream on the tunnel. However, at a same moment, payload data of only one QoS flow is encapsulated in a data packet transmitted in the stream.

Therefore, in Manner 2, the mapping information includes the mapping relationship between a plurality of QoS flows and a single stream on the tunnel and the mapping relationship between a single stream on the tunnel and a DRB. A single stream on the tunnel may be identified by using a stream ID, or a single stream on the tunnel may be identified by using a CID. This is not limited in this embodiment of this application.

Similarly, the QUIC protocol is used as an example. In an example, the mapping information may include the following content:

```
           Precedence = 1
           QUIC selection descriptor:
           Stream ID #1 or CID #1 (including a source CID and a target CID);
           QFI = 3, QFI = 5;
           DRB = #1.
```

This indicates that the stream #1 (the CID #1 used for the stream #1) is mapped to the QFI 3 or the QFI 5, and the stream ID #1 is transmitted on the DRB #1.

In another example, the mapping information may include the following content:

```
           Precedence = 1
           QUIC selection descriptor:
           Stream ID #1 or CID #1 (including a source CID and a target CID);
           QFI = 3, QFI = 5; and
           Precedence = 1
           QUIC selection descriptor:
           QFI = 3, QFI = 5;
           DRB = #1.
```

The access network device may separately send the mapping relationship between a plurality of QoS flows and a single stream on the tunnel to the terminal device, or separately send the mapping relationship between a plurality of QoS flows and a DRB to the terminal device. For example, the mapping relationship between a plurality of QoS flows and a single stream on the tunnel is carried in one piece of AS signaling, and the mapping relationship between a plurality of QoS flows and a DRB is carried in another piece of AS signaling. Content of the mapping information and a manner of delivering the mapping information are not limited in this embodiment of this application.

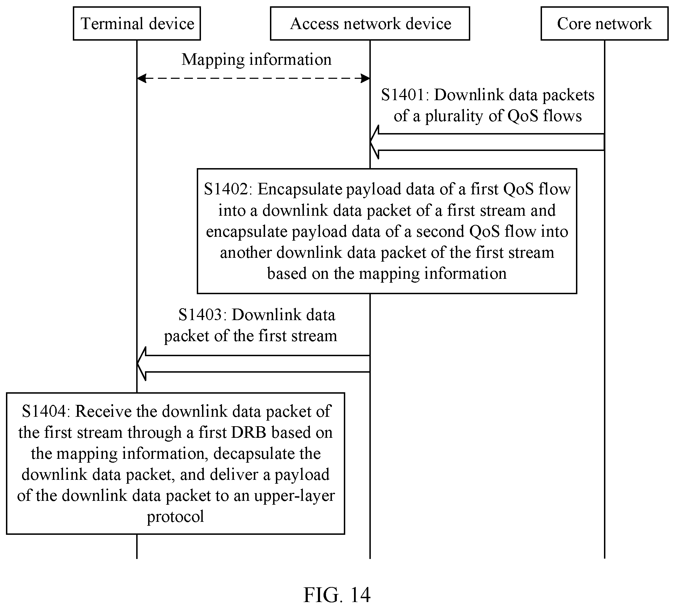

Based on the mapping information, when downlink data transmission is performed between the access network device and the terminal device, including sending, by the access network device, a tunneling protocol data packet to the terminal device, as shown in FIG. 14, the following steps may be included.

S1401: The access network device receives downlink data packets of a plurality of QoS flows from a core network device, where a downlink data packet of each QoS flow includes an identifier of the QoS flow. Herein, it only indicates that the access network device may receive the downlink data packets of the plurality of QoS flows from the core network device, and the downlink data packets may be simultaneously received, or may be separately received at different moments. A receiving occasion is not limited.

S1402: The access network device separately encapsulates payload data of the downlink data packets of the plurality of QoS flows into a downlink data packet of at least one stream on the tunnel based on the mapping information.

For example, the plurality of QoS flows include a first QoS flow and a second QoS flow, and the first QoS flow and the second QoS flow are mapped to a same stream on the tunnel.

During implementation of S1401, the access network device receives a downlink data packet of the first QoS flow, where the downlink data packet of the first QoS flow includes an identifier of the first QoS flow. During implementation of S1402, the access network device encapsulates payload data of the downlink data packet of the first QoS flow into a downlink data packet of a first stream based on the mapping information. Specifically, the payload data may be encapsulated into a data frame of the downlink data packet of the first stream. Using a QUIC protocol as an example, the payload data is encapsulated into a stream frame payload in a QUIC. The downlink data packet of the first stream may be alternatively encapsulated into a tunneling protocol data packet, and the tunneling protocol data packet may be sent to the terminal device.

Alternatively, during implementation of S1401, the access network device receives a downlink data packet of the second QoS flow, where the downlink data packet of the second QoS flow includes an identifier of the second QoS flow. During implementation of S1402, the access network device encapsulates payload data of the downlink data packet of the second QoS flow into a downlink data packet of a first stream based on the mapping information. Specifically, the payload data may be encapsulated into a data frame of the downlink data packet of the first stream. Using a QUIC protocol as an example, the payload data is encapsulated into a stream frame payload in a QUIC. The downlink data packet of the first stream may be alternatively encapsulated into a tunneling protocol data packet, and the tunneling protocol data packet may be sent to the terminal device.

Still using an example in which a GTU-P protocol is used on a core network side, a QFI 1 and a QFI 2 respectively represent QFIs corresponding to downlink data packets of two QoS flows received in S1401, and the mapping relationship that is between a QFI and a stream and that is indicated by the mapping information indicates that the QFI 1 and the QFI 2 are mapped to a stream ID 1. During implementation of S1402, the access network device needs to first remove a GTU-P header, then encapsulate payload data of a downlink data packet of the QFI 1 into a payload of a downlink data packet of the first stream based on the mapping relationship that is between a QFI and a stream and that is indicated by the mapping information, and add a corresponding QIF to a control information part of the downlink data packet of the first stream, for example, add the QFI 1 to a header of a stream frame on the tunnel that carries QoS flow data, or add information about the QFI 1 to a packet header of a tunneling protocol data packet into which a data frame of the first stream is encapsulated, or encapsulate the QFI 1 into independent tunneling protocol control information (for example, a QUIC control frame), and encapsulate the control information and the data frame of the first stream into a same tunneling protocol data packet. In addition/Alternatively, during implementation of S1402, the access network device needs to first remove a GTU-P header, then encapsulate payload data of a downlink data packet of the QFI 2 into a payload of another downlink data packet of the first stream based on the mapping relationship that is between a QFI and a stream and that is indicated by the mapping information, and add the QFI 2 to a control information part of the downlink data packet of the first stream, for example, a header of a stream frame on the tunnel that carries QoS flow data, or add information about the QFI 2 to a packet header of a tunneling protocol data packet into which a data frame of the first stream is encapsulated, or encapsulate the QFI 2 into independent tunneling protocol control information (for example, a QUIC control frame), and encapsulate the control information and the data packet of the first stream into a same tunneling protocol data packet.

It should be understood that, in the embodiment of Manner 2, when encapsulating, based on the mapping information, a data packet transmitted based on a stream on the tunnel, the access network device may place payload data of a same QFI in a payload of one frame. In this way, a header of the corresponding stream carries only an identifier of one QFI. Data of a plurality of QoS flows should not be encapsulated into a payload of a same frame, that is, data of a QoS flow corresponding to only one QFI is encapsulated into one frame. Data of QoS flows corresponding to different QFIs mapped to a same DRB may be placed in different frames in a same stream, and data of QFIs mapped to different DRBs should be placed in different streams. When implementing the following S1403, the access network device sends a data packet of a corresponding stream to the terminal device through a corresponding DRB based on the mapping relationship (1:1) that is between a stream and a DRB and that is indicated by the mapping information.

A QUIC protocol is used as an example. For an encapsulation mode of a data packet transmitted on the tunnel, refer to the foregoing related descriptions. Details are not described herein again. When encapsulating, based on the mapping information, a QUIC data packet transmitted on the tunnel, the access network device may include a value of a QFI in a header extension of a frame, or may include a value of a QFI in a header extension of the QUIC data packet. As shown in FIG. 3, in an optional implementation, the value of the QFI may be extended and encoded in a stream ID field in a header of the frame. Alternatively, an independent option/parameter may be added to a "length" field in the header of the frame to carry the value of the extended QFI, or the frame header is extended, and a new information element is added to carry the QFI. In another optional implementation, when the QUIC protocol is used, the QFI may be added to a QUIC header, and the QFI may be encoded in a CID field of the QUIC header, or the QFI may be encoded in another field that can be extended. Alternatively, the QUIC header may be extended to add a new information element to carry the QFI. In another optional implementation, a new control frame (control frame) may be further introduced into the QUIC data packet, the QFI is carried in the control frame, and the control frame and the downlink data packet of the stream are encapsulated into a same QUIC packet. A location for carrying the value of the QFI is not limited in this embodiment of this application.

S1403: The access network device sends the downlink data packet of the first stream to the terminal device through the first DRB based on the mapping information, including sending at least one downlink data packet of the first stream to the terminal device through the first DRB. Each downlink data packet of the first stream may be included in a tunneling protocol data packet sent by the access network device to the terminal device.

Correspondingly, the terminal device receives the downlink data packet of the first stream through the first DRB based on the mapping information, including receiving the at least one downlink data packet of the first stream through the first DRB, for example, accessing at least one tunneling protocol data packet that includes the downlink data packet of the first stream.

S1404: The downlink data packet of the first stream includes the identifier of the first QoS flow or the identifier of the second QoS flow, and the terminal device decapsulates the downlink data packet based on the mapping information, and delivers a payload of the downlink data packet of the first stream to an upper-layer protocol.

Similarly, the upper-layer protocol may be an IP protocol. During implementation of S1404, the terminal device may deliver, to the upper-layer protocol based on a mapping relationship between a QFI and an IP flow, a payload corresponding to the QFI in the downlink data packet of the first stream. Alternatively, the terminal device delivers, to the upper-layer protocol based on a mapping relationship between an IP flow and a QFI and a mapping relationship between a QFI and a stream, a payload corresponding to the QFI in the downlink data packet of the first stream. The mapping relationship between a QFI and an IP flow, or the mapping relationship between an IP flow and a QFI, and the mapping relationship between a QFI and a stream may be sent to the terminal device by the access network device or a core network element (for example, an SMF network element). For details, refer to the foregoing descriptions. Details are not described herein again.

When receiving the downlink data packet of the first stream through the first DRB, the terminal device may transfer the downlink data packet of the first stream to a stream buffer corresponding to a QUIC tunnel layer. The terminal device may identify information in a frame header in a payload of a QUIC data packet, for example, identify a QFI in the frame header. Then, the terminal device may decapsulate data in the payload of the frame based on mapping between the QFI and an IP flow, and deliver the data to the upper-layer IP protocol.

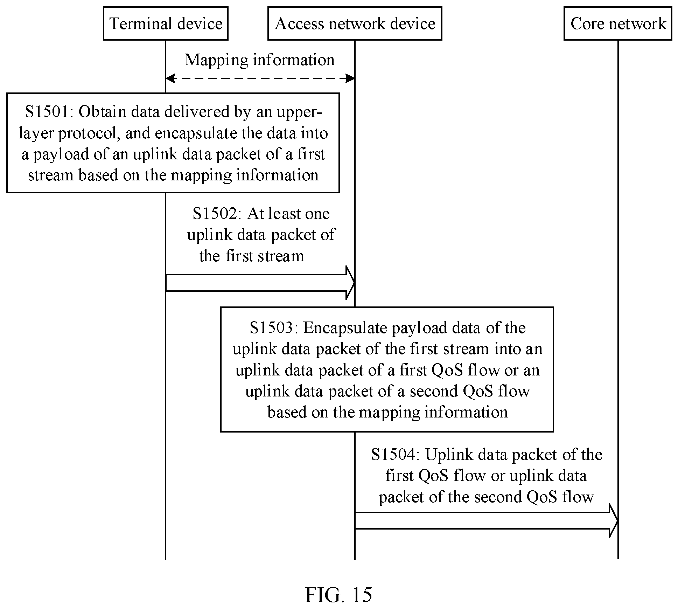

Based on the mapping information, when uplink data transmission is performed between the access network device and the terminal device, including sending, by the terminal device, a tunneling protocol data packet to the access network device, as shown in FIG. 15, the following steps may be included.

S1501: The terminal device obtains data delivered by an upper-layer protocol, and encapsulates the data into a payload of an uplink data packet of a first stream based on the mapping information.

The data delivered by the upper-layer protocol may include data mapped to a first QoS flow and/or data mapped to a second QoS flow. If the mapping information indicates that the data mapped to the first QoS flow and the data mapped to the second QoS flow can be mapped to a same stream on the tunnel, when S1501 is implemented, the terminal device may encapsulate, based on the mapping information, the data delivered by the upper-layer protocol into a payload of an uplink data packet of a first stream, where the uplink data packet of the first stream includes an identifier of the first QoS flow or an identifier of the second QoS flow, or a tunneling protocol uplink data packet that includes the uplink data packet of the first stream includes an identifier of the first QoS flow or an identifier of the second QoS flow.

Specifically, the terminal device may encapsulate, based on the mapping information, the data that is delivered by the upper-layer protocol and that needs to be mapped to the first QoS flow into a payload of an uplink data frame of the first stream, and then encapsulate the data frame into an uplink tunneling protocol data packet. The uplink tunneling protocol data packet includes the identifier of the first QoS flow. Specifically, the identifier of the first QoS flow may be located in a control information part of the uplink data packet of the first stream. For example, the identifier of the first QoS flow may be added to a header of the tunneling protocol data packet or a header of a stream frame on the tunnel that carries QoS flow data, or the identifier of the first QoS flow may be added to a header of the tunneling protocol data packet into which the uplink data frame of the first stream is encapsulated, or the identifier of the first QoS flow is encapsulated into independent tunneling protocol control information (for example, a QUIC control frame), and the control information and the data packet of the first stream are encapsulated into a same uplink tunneling protocol data packet. A location for adding the QFI is not limited in this embodiment of this application. For implementation details, refer to the foregoing downlink transmission solution described in FIG. 14. Details are not described herein again.

Alternatively, the data that is delivered by the upper-layer protocol and that needs to be mapped to the second QoS flow is encapsulated into a payload of another uplink data frame of the first stream based on the mapping information, and then the data frame is encapsulated into an uplink tunneling protocol data packet. The uplink tunneling protocol data packet includes the identifier of the second QoS flow. Specifically, a QFI may be located in a control information part of the uplink data packet of the first stream. For example, the identifier of the second QoS flow may be added to a header of the tunneling protocol data packet or a header of a stream frame on the tunnel that carries QoS flow data, or the identifier of the second QoS flow may be added to a header of the uplink tunneling protocol data packet into which the uplink data frame of the first stream is encapsulated, or the identifier of the second QoS flow is encapsulated into independent tunneling protocol control information (for example, a QUIC control frame), and the control information and the data packet of the first stream are encapsulated into a same uplink tunneling protocol data packet. It should be understood that, in the embodiment of Manner 2, when encapsulating, based on the mapping information, a data packet transmitted based on a stream on the tunnel, the terminal device may place payload data of a same QFI in a payload of one frame. In this way, a header of the corresponding stream carries only an identifier of one QFI. Data of a plurality of QFIs should not be encapsulated into a payload of a same frame, that is, data corresponding to only one QFI is encapsulated into one frame. Data corresponding to QFIs mapped to a same DRB may be placed in a same stream, and data of QFIs mapped to different DRBs should be placed in different streams. When implementing the following S1502, the terminal device sends a data packet of a corresponding stream to the access network device through a corresponding DRB based on the mapping relationship (1:1) that is between a stream and a DRB and that is indicated by the mapping information.

A QUIC protocol is used as an example. For an encapsulation mode of a data packet transmitted on the tunnel, refer to the foregoing related descriptions. Details are not described herein again. When encapsulating, based on the mapping information, a QUIC data packet transmitted on the tunnel, the terminal device may include a value of a QFI in a header extension of a corresponding frame in the QUIC data packet. As shown in FIG. 3, in an optional implementation, the value of the QFI may be extended and encoded in a stream ID field in a header of the frame. Alternatively, an independent option/parameter may be added to a "length" field in the header of the corresponding frame to carry the value of the extended QFI, or the frame header is extended, and a new information element is added to carry the QFI. In another optional implementation, when the QUIC protocol is used, the QFI may be added to a QUIC header, and the QFI may be encoded in a CID field of the QUIC header, or the QFI may be encoded in another field that can be extended. Alternatively, the QUIC header may be extended to add a new information element to carry the QFI. In another optional implementation, a new control frame (control frame) may be further introduced into the QUIC data packet, the QFI is carried in the control frame, and the control frame and the downlink data packet of the stream are encapsulated into a same QUIC packet. A location for carrying the value of the QFI is not limited in this embodiment of this application.

S1502: The terminal device sends, through the first DRB based on the mapping information, a tunneling protocol data packet including the uplink data frame of the first stream, for example, sends, through the first DRB, a tunneling protocol data packet including at least one uplink data frame of the first stream. Correspondingly, the access network device receives, through the first DRB based on the mapping information, the tunneling protocol data packet including the uplink data frame of the first stream, for example, receives, through the first DRB, the tunneling protocol data packet including the at least one uplink data frame of the first stream.

S1503: If the tunneling protocol data packet includes the identifier of the first QoS flow, the access network device encapsulates payload data of the data frame of the first stream in the tunneling protocol data packet into an uplink data packet of the first QoS flow based on the mapping information, and adds the identifier, for example, represented as a QFI 1, of the first QoS flow to a header of the uplink data packet of the first QoS flow, or adds the identifier of the first QoS flow to a tunneling protocol uplink data packet that includes the uplink data packet of the flow. For a location for carrying the QFI, refer to the foregoing related description. Details are not described herein again.

Alternatively, if the tunneling protocol data packet includes the identifier of the second QoS flow, the access network device encapsulates payload data of the first stream in the tunneling protocol data packet into an uplink data packet of the second QoS flow based on the mapping information, and adds the identifier, for example, represented as a QFI 2, of the second QoS flow to a header of the uplink data packet of the second QoS flow, or adds the identifier of the second QoS flow to a tunneling protocol uplink data packet that includes the uplink data packet of the flow. For a location for carrying the QFI, refer to the foregoing related description. Details are not described herein again.

For example, the uplink data packet of the first QoS flow or the uplink data packet of the second QoS flow may be a GTP-U data packet. For an encapsulation mode of the GTP-U data packet, refer to a related standard file of 3GPP. Details are not described herein.

S1504: The access network device sends the uplink data packet of the first QoS flow to the core network device, or the access network device sends the uplink data packet of the second QoS flow to the core network device. Correspondingly, the core network device receives the uplink data packet of the first QoS flow, or the core network device receives the uplink data packet of the second QoS flow.

Therefore, according to the methods shown in FIG. 14 and FIG. 15, when data transmission is performed between the terminal device and the access network device by using the target transport layer network protocol, based on the 1:1 mapping relationship between a stream and a DRB, an air interface can identify a data stream at a granularity of a stream on a tunnel, to perform QoS management and mapping on the stream, so as to perform differentiated transmission on a corresponding DRB and QoS flow.

(3) Manner 3: A tunnel is mapped to a QoS flow in a 1:1 manner, and the mapping information includes a mapping relationship between a tunnel and a single QoS flow and a mapping relationship between a tunnel and a DRB.

In Manner 3, the access network device and the terminal device may exchange the mapping information in a session establishment process in a manner shown in FIG. 9. For this process, refer to related descriptions in FIG. 9. Details are not described herein again. A difference lies in that content of the mapping information exchanged in Manner 3 is different from that in Manner 1 or Manner 2. In Manner 3, the mapping information includes the mapping relationship between a tunnel and a single QoS flow and the mapping relationship between a tunnel and a DRB. Then, data transmission may be performed between the terminal device and the access network device based on content indicated by the mapping information.

In Manner 3, mapping to a QoS flow/QFI is implemented at a granularity of a tunnel/connection. One DRB may carry data of at least one tunnel, and data of at least one stream transmitted on a same tunnel/connection may be encapsulated into a data packet of a same QoS flow/QFI. Alternatively, it is understood that data of at least one stream transmitted on one tunnel/connection is mapped to a same QoS flow/QFI.

Therefore, in Manner 3, the mapping information includes the mapping relationship between a tunnel and a single QoS flow and the mapping relationship between a tunnel and a DRB. Specifically, for example, data of a tunnel is carried on a first DRB, and the mapping information includes a mapping relationship between the tunnel and a first QoS flow and a mapping relationship between the tunnel and the first DRB.

The QUIC protocol is used as an example. In an example, the mapping information may include the following content:

```
           Precedence = 1
           QUIC selection descriptor:
           CID #1 (including a source CID and a target CID);
           QFI = 3;
           DRB = #1.
```

This indicates that data corresponding to the CID #1 is mapped to the QFI 3, and the data for the CID #1 is transmitted on the DRB #1.

When a plurality of tunnels/connections are mapped to a same DRB, the mapping information may alternatively include the following content:

```
           QUIC selection descriptor:
           CID #1, QFI = 3; CID #2, QFI = 4;
           DRB = #1.
```

In another example, the mapping information may include the following content:

```
           Precedence = 1
           QUIC selection descriptor:
           CID #1 (including a source CID and a target CID);
           QFI = 3; and
           Precedence = 1
           QUIC selection descriptor:
           QFI = 3;
           DRB = #1.
```

The access network device may separately send the mapping relationship between a tunnel and a single QoS flow to the terminal device, or separately send the mapping relationship between a QoS flow and a DRB to the terminal device. For example, a mapping relationship between a single QoS flow and a tunnel identifier is carried in one piece of AS signaling, and a mapping relationship between a QoS flow identifier and a DRB is carried in another piece of AS signaling. Content of the mapping information and a manner of delivering the mapping information are not limited in this embodiment of this application.

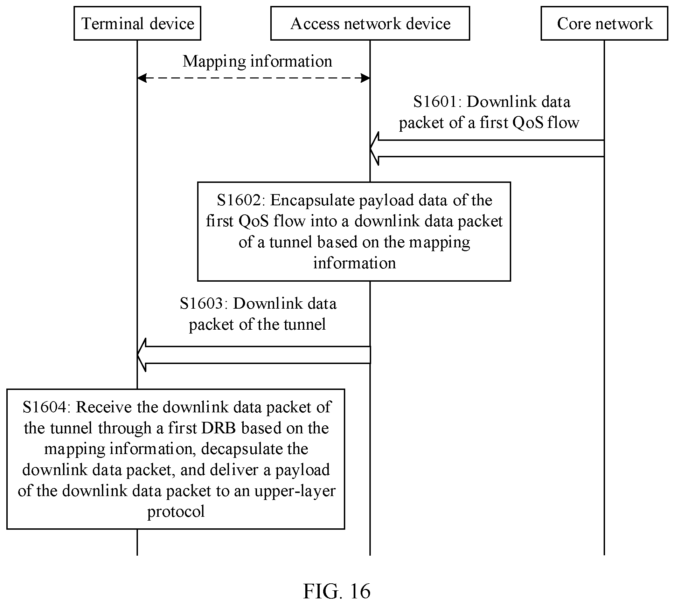

Based on the mapping information, when downlink data transmission is performed between the access network device and the terminal device, including sending, by the access network device, a tunneling protocol data packet to the terminal device, as shown in FIG. 16, the following steps may be included.

S1601: The core network sends a downlink data packet of a first QoS flow to the access network device. The core network may be specifically a user plane gateway function of the core network.

Correspondingly, the access network device receives the downlink data packet of the first QoS flow from the core network device.

S1602: The access network device encapsulates payload data of the downlink data packet of the first QoS flow into a downlink data packet of a tunnel based on the mapping information.

For example, a CID #1 (for example, including a source CID #1 and a target CID #1) represents a tunnel identifier (or referred to as a connection identifier) corresponding to the first QoS flow. For example, a GTU-P protocol is used on a core network side. During implementation of S1602, the access network device needs to first remove a GTU-P header, then encapsulate, based on a mapping relationship that is between a QFI and a CID and that is indicated by the mapping information, payload data of the downlink data packet of the first QoS flow into a payload of any stream frame or datagram frame corresponding to the CID #1, encapsulate the stream frame or datagram frame into a downlink tunneling protocol data packet, and use a corresponding CID, for example, the CID #1, in a header of the tunneling protocol data packet.

S1603: The access network device sends the downlink data packet of the tunnel to the terminal device based on the mapping information through a first DRB corresponding to the first QoS flow. Correspondingly, the terminal device receives the downlink data packet of the tunnel through the first DRB based on the mapping information.

S1604: The terminal device decapsulates the downlink data packet of the tunnel based on the mapping information, and delivers a payload of the downlink data packet to an upper-layer protocol.

Using a QUIC protocol as an example, when S1604 is implemented, the terminal device may deliver, to a QUIC tunnel, the downlink data packet received through the first DRB, demultiplex payload data of the QUIC data packet onto a plurality of IP flows based on a mapping relationship between a CID and an IP flow, and deliver the IP flows to an upper-layer application layer. Alternatively, the payload data of the QUIC data packet is demultiplexed onto a plurality of IP flows based on a mapping relationship between a CID and a QFI and an intermediate mapping relationship between a QFI and an IP flow, and the IP flows are delivered to the upper-layer application layer. In this case, intermediate mapping from the CID to the QFI and intermediate mapping from the QFI to the IP flow may be retained inside the terminal device. In this embodiment of this application, mapping from the QFI to the IP flow does not need to be modified greatly, and the mapping process needs to be enhanced only inside the terminal device. Similarly, the mapping relationship between a CID and an IP flow, or the mapping relationship between a CID and a QFI, and the intermediate mapping relationship between a QFI and an IP flow may also be indicated by the access network device. For details, refer to the foregoing related descriptions. Details are not described herein again.

Other implementation details of S1601 to S1604 are similar to the downlink transmission in Manner 1 or Manner 2. For specific implementation details, refer to the foregoing related descriptions with reference to FIG. 11 or FIG. 14. Details are not described herein again.

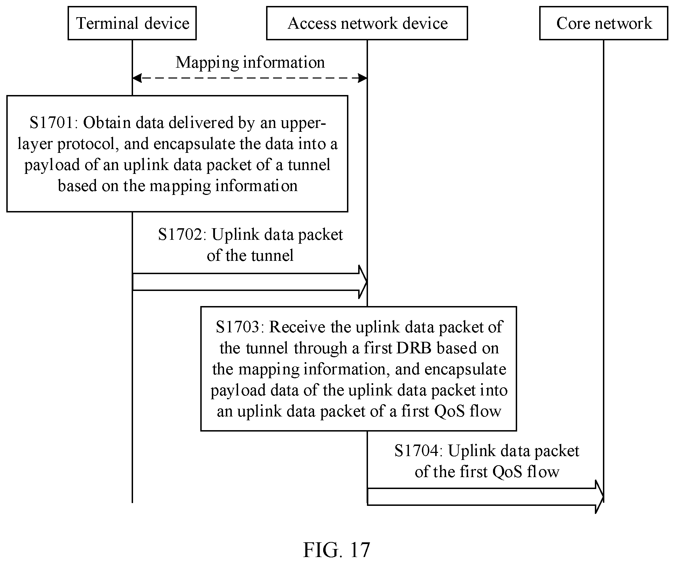

Based on the mapping information, when uplink data transmission is performed between the access network device and the terminal device, for example, the terminal device sends a tunneling protocol data packet to the access network device, as shown in FIG. 17, the following steps may be included.

S1701: The terminal device obtains data delivered by an upper-layer protocol, and encapsulates the data into a payload of an uplink data packet of a tunnel based on the mapping information.

For example, the upper-layer protocol may be an IP protocol. During implementation of S1701, the terminal device may encapsulate, based on a mapping relationship between an IP flow and a QFI and a mapping relationship between a QFI and a CID, the data delivered by the upper-layer protocol into any uplink frame, and encapsulate the data frame into a tunneling protocol data packet. That is, an uplink data packet corresponding to the CID is encapsulated, and a corresponding stream frame is not limited. In addition, a CID (for example, represented as a CID #1, including a source CID #1 and a target CID #1) of the tunnel is used in a header of the tunneling protocol data packet. In an optional implementation, the terminal device may map different 4-tuples (including a source IP address, a source port number, a destination IP address, and a destination port number) to different QUIC streams/datagrams.

S1702: The terminal device sends the uplink data packet of the tunnel through a first DRB based on the mapping information. Correspondingly, the access network device receives the uplink data packet of the tunnel through the first DRB based on the mapping information.

S1703: The access network device encapsulates payload data of the uplink data packet of the tunnel into an uplink data packet of a first QoS flow based on the mapping information.

After receiving the uplink data packet from the first DRB, the access network device may identify a tunnel identifier, namely, a CID, in the data packet, then encapsulate payload data in a corresponding frame in the uplink data packet into the uplink data packet of the first QoS flow based on a mapping relationship that is between a CID and an identifier of a QoS flow and that is indicated by the mapping information, and add a corresponding QFI to a header of the uplink data packet of the first QoS flow. For example, the uplink data packet of the first QoS flow may be, for example, a GTP-U data packet. For an encapsulation mode of the GTP-U data packet, refer to a related standard file of 3GPP. Details are not described herein.

S1704: The access network device sends the uplink data packet of the first QoS flow to a core network device. Correspondingly, the core network device receives the uplink data packet of the first QoS flow.

Other implementation details of S1701 to S1704 are similar to the uplink transmission in Manner 1 or Manner 2. For specific implementation details, refer to the foregoing related descriptions with reference to FIG. 12 or FIG. 15. Details are not described herein again.

Therefore, according to the methods shown in FIG. 16 and FIG. 17, when data transmission is performed between the terminal device and the access network device by using the target transport layer network protocol, based on the 1:1 mapping relationship between a tunnel/connection and a QFI or a DRB, an air interface can identify a data stream at a tunnel granularity, to perform QoS management and mapping on the data stream on the tunnel, so as to perform differentiated transmission on a corresponding DRB and QoS flow.

(4) Manner 4: A tunnel is mapped to a DRB in a 1:1 manner, and the mapping information includes a mapping relationship between a tunnel and a single DRB and a mapping relationship between a single stream on the tunnel and a QoS flow.

In Manner 4, the access network device and the terminal device may exchange the mapping information in a session establishment process in a manner shown in FIG. 9. For this process, refer to related descriptions in FIG. 9. Details are not described herein again. A difference lies in that content of the mapping information exchanged in Manner 4 is different from that in Manner 1, Manner 2, or Manner 3. In Manner 4, the mapping information includes the mapping relationship between a tunnel and a single DRB and the mapping relationship between a single stream on the tunnel and a QoS flow. Then, data transmission may be performed between the terminal device and the access network device based on content indicated by the mapping information.

In Manner 4, mapping to a QoS flow/QFI and mapping between a tunnel and a DRB are implemented at a granularity of a stream on the tunnel. For example, one DRB may carry at least one tunnel, and data of a single stream transmitted on a same tunnel/connection may be encapsulated into a data packet of a same QoS flow/QFI (or it is understood that data of a data packet of a same QoS flow/QFI is encapsulated into a data packet of a single stream transmitted on a same tunnel/connection), and a data packet of at least one stream on a same tunnel is transmitted on a same DRB. Alternatively, it is understood that data of at least one stream on one tunnel is mapped to a same QoS flow/QFI, and data of at least one stream on one tunnel is mapped to a same DRB.

Therefore, in Manner 4, the mapping information includes the mapping relationship between a tunnel and a single DRB and the mapping relationship between a single stream on the tunnel and a QoS flow. Specifically, for example, data of a tunnel is carried on a first DRB, and the mapping information includes a mapping relationship between the tunnel and the first DRB and a mapping relationship between a first stream on the tunnel and a first QoS flow.

The QUIC protocol is used as an example. In an example, the mapping information may include the following content:

```
           Precedence = 1
           QUIC selection descriptor:
           Stream ID #1, CID #1 (source CID 1, target CID 1) <- -> QFI = 3;
           Stream ID #2, CID #2 (source CID 2, target CID 2) <- -> QFI = 4;
           CID #1, CID #2 <-> DRB = #1.
```

Alternatively, only one stream, one QFI, and one connection ID may be included.

The foregoing content indicates that a connection 1 (which may have a plurality of CIDs, including the CID #1 and the CID #2) is transmitted on the DRB #1, the stream #1 (CID #1) in a QUIC connection is mapped to the QFI 3, and the stream #2 (CID #2) in the QUIC connection is mapped to the QFI 4.

In another example, the mapping information may include the following content:

```
           Stream ID #1, CID #1 (source CID 1, target CID 1) <- -> QFI = 3;
           CID #1 <-> DRB = #1; and
           Stream ID #2, CID #2 (source CID 2, target CID 2) <- -> QFI = 4;
           CID #2 <-> DRB = #1.
```

The access network device may separately notify the terminal device of mapping relationships between each of different tunnels and a DRB or a QFI. Content of the mapping information and a manner of delivering the mapping information are not limited in this embodiment of this application.

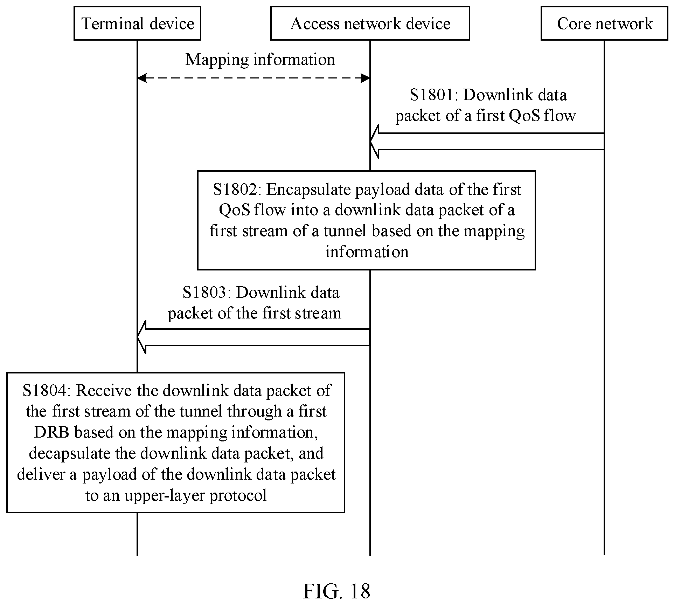

Based on the mapping information, when downlink data transmission is performed between the access network device and the terminal device, including sending, by the access network device, a tunneling protocol data packet to the terminal device, as shown in FIG. 18, the following steps may be included.

S1801: The core network sends a downlink data packet of a first QoS flow to the access network device. Correspondingly, the access network device receives the downlink data packet of the first QoS flow from the core network device.

S1802: The access network device encapsulates payload data of the downlink data packet of the first QoS flow into a downlink data packet of a first stream on the tunnel based on the mapping information.

For example, a CID #1 (for example, including a source CID #1 and a target CID #1) represents a tunnel identifier (or referred to as a connection identifier) of a tunnel corresponding to the first QoS flow. For example, a GTU-P protocol is used on a core network side. During implementation of S1802, the access network device needs to first remove a GTU-P header, then encapsulate, based on a mapping relationship that is between a QFI and a CID + a stream ID and that is indicated by the mapping information, payload data of the downlink data packet of the first QoS flow into a payload of a stream frame or datagram frame corresponding to the CID #1 and the stream ID 1, then encapsulate the stream frame or datagram frame into a tunneling protocol data packet, and use a CID #1 (a source CID #1 and a target CID #1) in a header of the tunneling protocol data packet. A corresponding QFI may be added to a header of the stream frame or the datagram frame, or a corresponding QFI may be added to a header of the tunneling protocol data packet including the stream frame or the datagram frame, or a QFI is encapsulated in independent tunneling protocol control information (for example, a QUIC control frame). For a location for carrying the QFI, refer to the foregoing related description. Details are not described herein again.

S1803: The access network device sends, through the first DRB based on the mapping information, a tunneling protocol data packet including the downlink data frame of the first stream on the tunnel. Correspondingly, the terminal device receives, through the first DRB based on the mapping information, the tunneling protocol data packet including the downlink data frame of the first stream on the tunnel.

For example, the tunneling protocol data packet including the downlink data frame of the first stream on the tunnel is sent through a DRB #1 based on mapping between the CID #1 and the DRB #1 that is indicated by the mapping information. Correspondingly, the terminal device receives, through the DRB #1 based on the mapping information, the tunneling protocol data packet including the downlink data frame of the first stream on the tunnel.

S1804: The terminal device decapsulates the tunneling protocol data packet based on the mapping information, and delivers a payload of the tunneling protocol data packet to the upper-layer protocol.

Using a QUIC protocol as an example, when S1804 is implemented, the terminal device may deliver, to a QUIC tunnel, the tunneling protocol data packet that is received through the first DRB and that includes the downlink data frame of the first stream on the tunnel, demultiplex payload data of the QUIC data packet onto a plurality of IP flows based on a mapping relationship between a CID and a stream ID and a mapping relationship between a stream ID and an IP flow, and deliver the IP flows to an upper-layer application layer. Alternatively, the payload data of the QUIC data packet is demultiplexed onto a plurality of IP flows based on a mapping relationship between a tunnel identifier and a QFI and a mapping relationship between a QFI and an IP flow, and the IP flows are delivered to the upper-layer application layer. In this case, intermediate mapping from the tunnel identifier to the QFI and intermediate mapping from the QFI to the IP flow may be retained inside the terminal device. In this embodiment of this application, mapping from the QFI to the IP flow does not need to be modified greatly, and the mapping process needs to be enhanced only inside the terminal device. The mapping relationship may be sent by the access network device to the terminal device. For a notification manner, refer to the foregoing related descriptions. Details are not described herein again.

Other implementation details of S1801 to S1804 are similar to the downlink transmission in Manner 1 or Manner 2. For specific implementation details, refer to the foregoing related descriptions with reference to FIG. 11 or FIG. 14. Details are not described herein again.

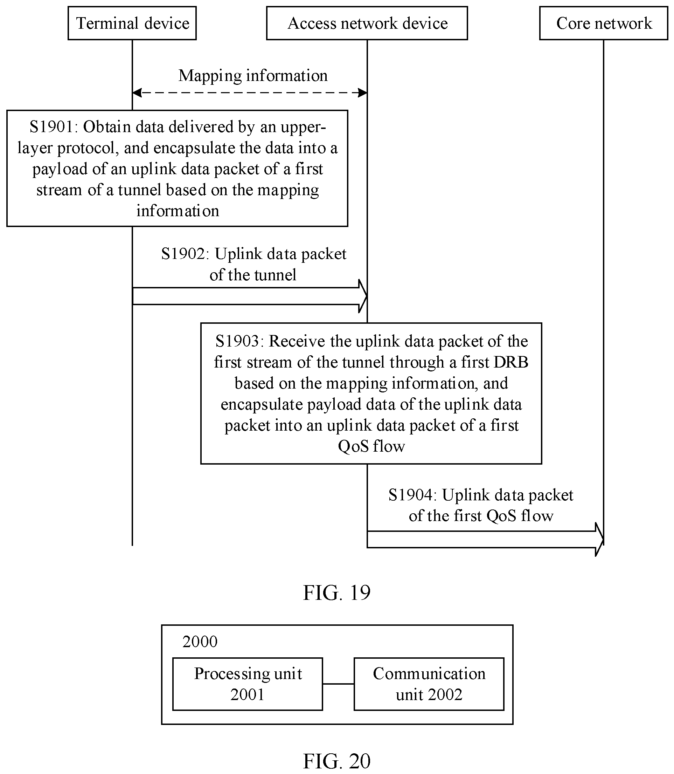

Based on the mapping information, when uplink data transmission is performed between the access network device and the terminal device, for example, the terminal device sends a tunneling protocol data packet to the access network device, as shown in FIG. 19, the following steps may be included.

S1901: The terminal device obtains data delivered by an upper-layer protocol, and encapsulates the data into a payload of an uplink data packet of a first stream on the tunnel based on the mapping information.

For example, the upper-layer protocol may be an IP protocol. When S1901 is implemented, the terminal device may encapsulate, based on a mapping relationship between an IP flow and a QFI and a mapping relationship between a QFI and a stream, the data delivered by the upper-layer protocol into a frame of a corresponding stream, then encapsulate the frame into a tunneling protocol data packet, and use a tunnel CID (for example, represented as a CID #1, including a source CID #1 and a target CID #1) in a header of the tunneling protocol data packet. A corresponding QFI may be added to a header of the stream frame, or a corresponding QFI may be added to a header of the tunneling protocol data packet including the stream frame, or a QFI is encapsulated in independent tunneling protocol control information (for example, a QUIC control frame). For a location for carrying the QFI, refer to the foregoing related description. Details are not described herein again.

S1902: The terminal device sends, through the first DRB based on the mapping information, the tunneling protocol data packet that includes the uplink data frame of the first stream on the tunnel. Correspondingly, the access network device receives, through the first DRB based on the mapping information, the tunneling protocol data packet including the uplink data frame of the first stream on the tunnel.

S1903: The access network device encapsulates, into an uplink data packet of the first QoS flow based on the mapping information, payload data of the uplink data frame of the first stream on the tunnel in the tunneling protocol data packet.

After receiving the uplink tunneling protocol data packet, the access network device may identify a tunnel identifier and a flow identifier in the uplink tunneling protocol data packet, then encapsulate payload data in a corresponding frame in the data packet into the uplink data packet of the first QoS flow based on a mapping relationship that is between a stream ID, a CID, and an identifier of a QoS flow and that is indicated by the mapping information, and add a corresponding QFI to a header of the data packet. For example, the uplink data packet of the first QoS flow may be, for example, a GTP-U data packet. For an encapsulation mode of the GTP-U data packet, refer to a related standard file of 3GPP. Details are not described herein.

S1904: The access network device sends the uplink data packet of the first QoS flow to a core network device. Correspondingly, the core network device receives the uplink data packet of the first QoS flow.

Other implementation details of S1901 to S1904 are similar to the uplink transmission in Manner 1 or Manner 2. For specific implementation details, refer to the foregoing related descriptions with reference to FIG. 12 or FIG. 15. Details are not described herein again.

Therefore, according to the methods shown in FIG. 18 and FIG. 19, when data transmission is performed between the terminal device and the access network device by using the target transport layer network protocol, based on the 1:1 mapping relationship between a tunnel/connection and a DRB and the 1:1 mapping relationship between a stream on the tunnel/connection and a QFI, QoS management and mapping can be performed on a data stream on the tunnel, to perform differentiated transmission on a corresponding DRB and QoS flow.

An embodiment of this application further provides a communication apparatus, configured to perform the method performed by the terminal device or the access network device in the foregoing method embodiments. For related features, refer to the foregoing method embodiments. Details are not described herein again.

As shown in FIG. 20, a communication apparatus 2000 may include a processing unit 2001 and a communication unit 2002.

When the communication apparatus is configured to perform the method performed by the access network device, there may be at least one tunnel between the access network device and a terminal device, the tunnel may include at least one stream, and the at least one stream is used to transmit data. The communication apparatus may include: the processing unit 2001, configured to obtain mapping information, where the mapping information indicates a mapping relationship between the tunnel, a data radio bearer DRB, and a quality of service QoS flow; and the communication unit 2002, configured to send the mapping information to the terminal device; and perform data transmission with the terminal device based on the mapping information. For example, the access network device sends an uplink data packet based on the mapping information, and/or receives a downlink data packet based on the mapping information. For a specific implementation, refer to the method steps implemented by the access network device in the foregoing method embodiments. Details are not described herein again.

When the communication apparatus is configured to perform the method performed by the terminal device, there may be at least one tunnel between the terminal device and an access network device, the tunnel may include at least one stream, and the at least one stream is used to transmit data. The communication apparatus may include: the communication unit 2002, configured to receive mapping information, where the mapping information indicates a mapping relationship between the tunnel, a data radio bearer DRB, and a quality of service QoS flow; and perform data transmission with the access network device based on the mapping information. For example, the terminal device sends an uplink data packet based on the mapping information, and/or receives a downlink data packet based on the mapping information. For a specific implementation, refer to the method steps implemented by the terminal device in the foregoing method embodiments. Details are not described herein again.

It should be understood that division into the units in the foregoing apparatus is merely logical function division. During actual implementation, all or some of the units may be integrated into one physical entity, or may be physically separated. In addition, the unit in the apparatus may be implemented in a form of invoking software by a processor. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor like a central processing unit (Central Processing Unit, CPU) or a microprocessor, and the memory is a memory inside the apparatus or a memory outside the apparatus. Alternatively, the unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented by using a programmable logic device (programmable logic device, PLD). Using a field programmable gate array (Field Programmable Gate Array, FPGA) as an example, the field programmable gate array may include a large quantity of logic gate circuits, and a connection relationship between the logic gate circuits is configured by using a configuration file, to implement functions of some or all of the foregoing units. All the units of the foregoing apparatus may be implemented in a form of invoking software by a processor, or may be implemented in a form of a hardware circuit, or some of the units are implemented in a form of invoking software by a processor, and the remaining units are implemented in a form of a hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship between hardware circuits. The logical relationship between the hardware circuits is fixed or reconfigurable. For example, the processor is a hardware circuit implemented by an ASIC or a PLD, for example, an FPGA. In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of the units of the apparatus. Types of the at least one processor may be different, for example, include a CPU and an FPGA, a CPU and an artificial intelligence processor, a CPU and a GPU, or the like.

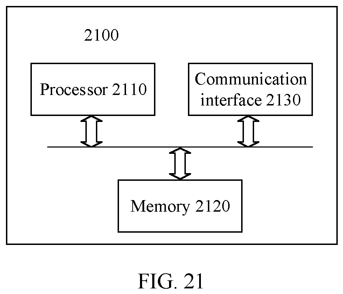

In a simple embodiment, a person skilled in the art may figure out that the communication apparatuses in the foregoing embodiments each may be in a form shown in FIG. 21.

An apparatus 2100 shown in FIG. 21 includes at least one processor 2110 and a communication interface 2130. In an optional design, a memory 2120 may be further included.

A specific medium of connection between the processor 2110 and the memory 2120 is not limited in embodiments of this application.

In the apparatus shown in FIG. 21, when communicating with another device, the processor 2110 may transmit data through the communication interface 2130.

When the communication apparatus is in the form shown in FIG. 21, the processor 2110 in FIG. 21 may invoke computer-executable instructions stored in the memory 2120, so that the apparatus 2100 can perform any one of the foregoing method embodiments.

An embodiment of this application further relates to a chip system. The chip system includes a processor, configured to invoke a computer program or computer instructions stored in a memory, so that the processor performs the method according to any one of the foregoing embodiments.

In a possible implementation, the processor may be coupled to the memory through an interface.

In a possible implementation, the chip system may further directly include the memory. The memory stores the computer program or the computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

For example, in embodiments of this application, the processor is an integrated circuit chip, and has a signal processing capability. For example, the processor may be an FPGA, or may be a general-purpose processor, a DSP, an ASIC or another programmable logic device, a discrete gate or transistor logic device, or a discrete hardware component, or may be a system on chip (system on chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. Thus, this application is intended to cover these modifications and variations to embodiments of this application, provided that they fall within the scope of the claims of this application and their equivalent technologies. In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

## Claims

1. A data transmission method, applied to an access network device, wherein there is at least one tunnel between the access network device and a terminal device, the tunnel comprises at least one stream, the at least one stream is used to transmit data, and the method comprises:
obtaining mapping information, wherein the mapping information indicates a mapping relationship between the tunnel, a data radio bearer DRB, and a quality of service QoS flow;
sending the mapping information to the terminal device; and
performing data transmission with the terminal device based on the mapping information.

2. The method according to claim 1, wherein the at least one stream on the tunnel comprises a first stream, the mapping information comprises a mapping relationship between a first QoS flow and the first stream and a mapping relationship between the first stream and a first DRB, and the first stream is carried on the first DRB.

3. The method according to claim 2, wherein performing data transmission with the terminal device based on the mapping information comprises:
receiving a downlink data packet of the first QoS flow from a core network device; and
encapsulating payload data of the downlink data packet of the first QoS flow into a downlink data packet of the first stream based on the mapping information, and sending the downlink data packet of the first stream through the first DRB.

4. The method according to claim 2 or 3, wherein performing data transmission with the terminal device based on the mapping information comprises:
receiving an uplink data packet of the first stream through the first DRB based on the mapping information;
encapsulating payload data of the uplink data packet of the first stream into an uplink data packet of the first QoS flow; and
sending the uplink data packet of the first QoS flow to the core network device.

5. The method according to claim 1, wherein the at least one stream on the tunnel comprises a first stream, the mapping information comprises a mapping relationship between a plurality of QoS flows and the first stream and a mapping relationship between the first stream and a first DRB, and the first stream is carried on the first DRB.

6. The method according to claim 5, wherein the plurality of QoS flows comprise a first QoS flow and a second QoS flow, and performing data transmission with the terminal device based on the mapping information comprises:
receiving a downlink data packet of the first QoS flow, wherein the downlink data packet of the first QoS flow comprises an identifier of the first QoS flow; and
encapsulating payload data of the downlink data packet of the first QoS flow into a downlink data packet of the first stream based on the mapping information, and sending the downlink data packet of the first stream through the first DRB;and/or
receiving a downlink data packet of the second QoS flow, wherein the downlink data packet of the second QoS flow comprises an identifier of the second QoS flow; and
encapsulating payload data of the downlink data packet of the second QoS flow into a downlink data packet of the first stream based on the mapping information, and sending the downlink data packet of the first stream through the first DRB.

7. The method according to claim 5 or 6, wherein performing data transmission with the terminal device based on the mapping information comprises:
receiving an uplink data packet of the first stream through the first DRB based on the mapping information; and
if the uplink data packet of the first stream comprises the identifier of the first QoS flow, the method further comprises:
encapsulating payload data of the uplink data packet of the first stream into an uplink data packet of the first QoS flow based on the mapping information, and sending the uplink data packet of the first QoS flow to a core network device;and/or
if the uplink data packet of the first stream comprises the identifier of the second QoS flow, the method further comprises:
encapsulating payload data of the uplink data packet of the first stream into an uplink data packet of the second QoS flow based on the mapping information, and sending the uplink data packet of the second QoS flow to a core network device.

8. The method according to claim 1, wherein the mapping information comprises a mapping relationship between the tunnel and a first QoS flow and a mapping relationship between the tunnel and a first DRB, and data of the tunnel is carried on the first DRB.

9. The method according to claim 8, wherein performing data transmission with the terminal device based on the mapping information comprises:
receiving a downlink data packet of the first QoS flow from a core network device;
encapsulating payload data of the downlink data packet of the first QoS flow into a downlink data packet of the tunnel based on the mapping information; and
sending the downlink data packet of the tunnel through the first DRB.

10. The method according to claim 8 or 9, wherein performing data transmission with the terminal device based on the mapping information comprises:
receiving an uplink data packet of the tunnel through the first DRB based on the mapping information;
encapsulating payload data of the uplink data packet of the tunnel into an uplink data packet of the first QoS flow; and
sending the uplink data packet of the first QoS flow to the core network device.

11. The method according to claim 1, wherein the mapping information comprises a mapping relationship between the tunnel and a first DRB and a mapping relationship between a first stream on the tunnel and a first QoS flow, and data of the tunnel is carried on the first DRB.

12. The method according to claim 11, wherein performing data transmission with the terminal device based on the mapping information comprises:
receiving a downlink data packet of the first QoS flow from a core network device;
encapsulating payload data of the downlink data packet of the first QoS flow into a downlink data packet of the first stream on the tunnel based on the mapping information; and
sending the downlink data packet of the first stream on the tunnel through the first DRB.

13. The method according to claim 11 or 12, wherein performing data transmission with the terminal device based on the mapping information comprises:
receiving an uplink data packet of the first stream on the tunnel through the first DRB based on the mapping information;
encapsulating payload data of the uplink data packet of the first stream on the tunnel into an uplink data packet of the first QoS flow; and
sending the uplink data packet of the first QoS flow to the core network device.

14. A data transmission method, applied to a terminal device, wherein there is at least one tunnel between the terminal device and an access network device, the tunnel comprises at least one stream, the at least one stream is used to transmit data, and the method comprises:
receiving mapping information, wherein the mapping information indicates a mapping relationship between the tunnel, a data radio bearer DRB, and a quality of service QoS flow; and
performing data transmission with the access network device based on the mapping information.

15. The method according to claim 14, wherein the at least one stream on the tunnel comprises a first stream, the mapping information comprises a mapping relationship between a first QoS flow and the first stream and a mapping relationship between the first stream and a first DRB, and the first stream is carried on the first DRB.

16. The method according to claim 15, wherein performing data transmission with the access network device based on the mapping information comprises:
receiving a downlink data packet of the first stream through the first DRB based on the mapping information; and
decapsulating the downlink data packet, and delivering a payload of the downlink data packet to an upper-layer protocol.

17. The method according to claim 15 or 16, wherein performing data transmission with the access network device based on the mapping information comprises:
obtaining data delivered by the upper-layer protocol, and encapsulating the data into a payload of an uplink data packet of the first stream based on the mapping information; and
sending the uplink data packet through the first DRB.

18. The method according to claim 14, wherein the at least one stream on the tunnel comprises a first stream, the mapping information comprises a mapping relationship between a plurality of QoS flows and the first stream and a mapping relationship between the first stream and a first DRB, and the first stream is carried on the first DRB.

19. The method according to claim 18, wherein the plurality of QoS flows comprise a first QoS flow and a second QoS flow, and receiving the downlink data packet based on the mapping information comprises:
receiving a downlink data packet of the first stream through the first DRB based on the mapping information, wherein the downlink data packet comprises an identifier of the first QoS flow or an identifier of the second QoS flow; and
decapsulating the downlink data packet, and delivering a payload of the downlink data packet to an upper-layer protocol.

20. The method according to claim 18 or 19, wherein performing data transmission with the access network device based on the mapping information comprises:
obtaining data delivered by the upper-layer protocol, and encapsulating the data into a payload of an uplink data packet of the first stream based on the mapping information, wherein the uplink data packet comprises the identifier of the first QoS flow or the identifier of the second QoS flow; and
sending the uplink data packet of the first stream through the first DRB.

21. The method according to claim 14, wherein the mapping information comprises a mapping relationship between the tunnel and a first QoS flow and a mapping relationship between the tunnel and a first DRB, and data of the tunnel is carried on the first DRB.

22. The method according to claim 21, wherein performing data transmission with the access network device based on the mapping information comprises:
receiving a downlink data packet of the tunnel through the first DRB based on the mapping information; and
decapsulating the downlink data packet of the tunnel, and delivering a payload of the downlink data packet to an upper-layer protocol.

23. The method according to claim 21 or 22, wherein performing data transmission with the access network device based on the mapping information comprises:
obtaining data delivered by the upper-layer protocol, and encapsulating the data into a payload of an uplink data packet of the tunnel based on the mapping information; and
sending the uplink data packet through the first DRB.

24. The method according to claim 14, wherein the mapping information comprises a mapping relationship between the tunnel and a first DRB and a mapping relationship between a first stream on the tunnel and a first QoS flow, and data of the tunnel is carried on the first DRB.

25. The method according to claim 24, wherein performing data transmission with the access network device based on the mapping information comprises:
receiving a downlink data packet of the first stream on the tunnel through the first DRB based on the mapping information; and
decapsulating the downlink data packet of the first stream on the tunnel, and delivering a payload of the downlink data packet to an upper-layer protocol.

26. The method according to claim 24 or 25, wherein performing data transmission with the access network device based on the mapping information comprises:
obtaining data delivered by the upper-layer protocol, and encapsulating the data into a payload of an uplink data packet of the first stream on the tunnel based on the mapping information; and
sending the uplink data packet through the first DRB.

27. A communication apparatus, comprising at least one processor and an interface circuit, wherein the interface circuit is configured to provide data or code instructions for the at least one processor, and the at least one processor is configured to implement the method according to any one of claims 1 to 13 or the method according to any one of claims 14 to 26 by using a logic circuit or by executing the code instructions.

28. A communication system, comprising a communication apparatus configured to implement the method according to any one of claims 1 to 13, or a communication apparatus configured to implement the method according to any one of claims 14 to 26.

29. A computer-readable storage medium, wherein the computer-readable medium stores program code, and when the program code is run on a computer, the computer is enabled to perform the method according to any one of claims 1 to 13 or perform the method according to any one of claims 14 to 26.

30. A computer program product, wherein when the computer program product runs on a computer, the computer is enabled to perform the method according to any one of claims 1 to 13 or perform the method according to any one of claims 14 to 26.
